# EUROPEAN PATENT SPECIFICATION

(11) **EP 4 556 539 B1**
(45) Date of publication and mention of the grant of the patent: **09.09.2026**
(21) Application number: 25168114.4
(22) Date of filing: 20.06.2024
(51) Int. Cl.: C09J 7/00

(54) **MULTIPLE STRUCTURES AND FOLDABLE ELECTRONIC DEVICE COMPRISING SAME**
MEHRFACHSTRUKTUREN UND KLAPPBARE ELEKTRONISCHE VORRICHTUNG DAMIT
STRUCTURES MULTIPLES ET DISPOSITIF ÉLECTRONIQUE PLIABLE LES COMPRENANT

(30) Priority: 07.08.2023 KR 20230102927; 27.09.2023 KR 20230130490
(43) Date of publication of application: 21.05.2025
(62) Document number(s) of the earlier application(s) in accordance with Art. 76 EPC: 24736637.0 / 4 528 425
(73) Proprietor: Samsung Electronics Co., Ltd., Suwon-si, Gyeonggi-do 16677 (KR)
(72) Inventor: BAEK, Sangin, 16677 Suwon-si (KR); PARK, Daehyeong, 16677 Suwon-si (KR)
(74) Representative: HGF

(56) References cited:
- EP-A1- 4 163 761
- US-A1- 2021 294 390

## Description

### [TECHNICAL FIELD]

Embodiments of the disclosure described herein relate to a plurality of structures and a foldable electronic device including the same.

### [BACKGROUND ART]

A portable electronic device, such as a smartphone, may provide various functions as well as a call function based on various types of applications. In the process of providing the various functions, the portable electronic device may output a screen corresponding to each function. A user may want to use a wider screen when using the various functions. However, in the general portable electronic device, the overall size may be increased when a display device is enlarged to display a screen, and therefore portability may be deteriorated. Accordingly, a foldable portable electronic device is being developed so as to increase the size of a screen while maintaining portability.

US 2021/294390 A1 discloses a foldable portable electronic device comprising measures to reduce ingress of contaminants through the hinge area.

### [DETAILED DESCRIPTION OF THE INVENTION]

### [TECHINICAL PROBLEM]

A foldable electronic device typically comprises at least one folding axis, about which the foldable electronic device can be folded. It may be that the foldable electronic device comprises a first housing, a second housing and a hinge structure coupled to the first housing and the second housing. The foldable electronic device may be configured to fold around the hinge structure. When folding a foldable electronic device it is necessary for components of the foldable electronic device to move with respect to one another, for example around the folding axis in the hinge structure. As such it can be difficult to maintain a seal around and within a hinge structure such that contaminants such as dust and other particulates are prevented from entering the electronic device at the hinge structure.

It is desirable to prevent contaminants entering the electronic device since contaminants can interfere with the function of the electronic device, for example by blocking air flow or creating undesirable conductivity between components. As such it is desirable to prevent contaminants from entering a foldable electronic device via a hinge structure.

In addition, if, when the foldable electronic device is folded, one or more of the components of the foldable electronic device move in a fashion that is not intended, so that at least one of the components of the electronic device is not in an intended location with respect to one other of the components of the foldable electronic device, then part of the foldable electronic device may undergo an unplanned or undesirable deformation. This deformation may damage components of the foldable electronic device, especially if it happens repeatedly. Therefore it is desirable that, when the foldable electronic device is folded, the components of the electronic device move in an intended fashion and are maintained in their intended locations.

### [TECHNICAL SOLUTION]

A foldable electronic device (or, a portable electronic device, a portable communication device, or a foldable electronic device having a communication function) according to at least one embodiment of the disclosure includes a first housing, a second housing, a hinge structure coupled to the first housing and the second housing, a hinge housing where the hinge structure is disposed, a first dustproof structure and a second dustproof structure disposed between the first housing and the hinge housing, and a first support structure disposed between the first dustproof structure and the second dustproof structure in a lengthwise direction of the hinge housing. According to at least one embodiment of the disclosure, the first dustproof structure and the first support structure make contact with each other or are spaced apart from each other by a distance smaller than a length of the first support structure. According to at least one embodiment of the disclosure, the second dustproof structure and the first support structure make contact with each other or are spaced apart from each other by a distance smaller than the length of the first support structure.

A foldable electronic device according to at least one embodiment of the disclosure includes a first housing, a second housing, a hinge structure coupled to the first housing and the second housing, a hinge housing that accommodates at least a portion of the hinge structure and that is substantially disposed between the first housing and the second housing, at least one first structure disposed between an inner surface of the first housing and an outer surface of the hinge housing and at least partially brought into contact with a first portion of the outer surface of the hinge housing while the foldable electronic device is changed from an unfolded state to a folded state, and at least one second structure disposed between the inner surface of the first housing and the outer surface of the hinge housing so as to be adjacent to the first structure and at least partially brought into contact with a second portion of the outer surface of the hinge housing different from the first portion while the foldable electronic device is changed from the unfolded state to the folded state.

The invention is defined by the appended claims.

### [DESCRIPTION OF THE DRAWINGS]

FIG. 1 is a view illustrating an unfolded state of an electronic device according to an embodiment.
FIG. 2 is a view illustrating a folded state of the electronic device of FIG. 1 according to an embodiment.
FIG. 3 is an exploded perspective view of the portable communication device or electronic device according to an embodiment.
FIG. 4 is an exploded perspective view illustrating a configuration in which a plurality of structures are mounted in the electronic device according to an embodiment.
FIG. 5 is a view illustrating an example of the plurality of structures according to an embodiment.
FIG. 6 is a view illustrating an unfolded state of the electronic device including the plurality of structures according to an embodiment.
FIG. 7 is a view illustrating a folded state of the electronic device including the plurality of structures according to an embodiment.
FIG. 8 is a view illustrating an example of a first structure and a second structure of the electronic device according to an embodiment.
FIGS. 9A to 9F are views illustrating dustproof structures and support structures of the electronic device according to embodiments.
FIG. 10 is a view illustrating an example of the widths of a dustproof structure and a support structure of the electronic device according to an embodiment.
FIG. 11 illustrates a dustproof structure and a support structure according to an embodiment.
FIG. 12 is a view illustrating an example of a height relationship between a dustproof structure and a support structure according to an embodiment.
FIG. 13 is a view illustrating a support structure included in the electronic device according to an embodiment.
FIG. 14 is a view illustrating an example of an assembly process between a first housing and a support structure of the electronic device according to an embodiment.
FIG. 15 is a view illustrating an example of a manufacturing method of the electronic device according to an embodiment.
FIG. 16 illustrates views of a support structure according to an embodiment.
FIG. 17 is a view illustrating an assembly process of a support structure including a passage and the first housing according to an embodiment.
FIG. 18 is a view illustrating an assembly process of a support structure and the first housing including a guide recess according to an embodiment.
FIG. 19 is a view illustrating an electronic device according to an embodiment including a support structure assembled to a housing in a sliding manner.
FIG. 20 is a view illustrating an electronic device according to an embodiment including a support structure assembled to a housing in a sliding manner.
FIG. 21 is a view illustrating an electronic device according to an embodiment including a support structure assembled to a housing in a sliding manner.
FIG. 22 is a view illustrating an example of a sliding operation of a support structure assembled with a first housing of an electronic device according to an embodiment.

### [DETAILED DESCRIPTION]

Hereinafter, at least one embodiment of the disclosure will be described with reference to the accompanying drawings.

An embodiment of the disclosure provides a plurality of structures having a support structure and a dustproof structure and a foldable electronic device including the plurality of structures. A dustproof structure is a structure which obstructs the passage of some, or most, or all dust, particulates, contaminants or foreign matter. A dustproof structure included in an electronic device may obstruct the passage of some, or most or all dust, particulates, contaminants or foreign matter into the electronic device through a particular passageway which is at least partly obstructed by the dustproof structure.

An embodiment of the disclosure provides a plurality of structures for maintaining a constant gap between each of a first housing and a second housing and a hinge housing through a support structure brought into close contact with a dustproof structure and a foldable electronic device including the plurality of structures.

A support structure may be arranged between components of a foldable electronic device, for example between a first housing or a second housing and hinge housing or hinge structure. When the first housing or second housing is urged towards the hinge housing or hinge structure, the support structure may resist a motion of the first housing or second housing towards the hinge housing or hinge structure. When the hinge housing or hinge structure is urged towards the first housing or second housing, the support structure may resist a motion of the hinge housing or hinge structure towards the first housing or second housing.

An embodiment of the disclosure provides a plurality of structures for preventing or reducing infiltration of external foreign matter between each of a first housing and a second housing and a hinge housing and/or between a dustproof structure and a support structure by bringing the dustproof structure into close contact with the support structure and a foldable electronic device including the plurality of structures.

A foldable electronic device according to an embodiment of the disclosure may include a plurality of structures. Technology related to a dustproof structure among the plurality of structures is disclosed in Korean Patent Publication No. 10-2021-0047139 first filed by the present applicant (published on April 29, 2021 and entitled "Electronic Device Including Dustproof Structure"; inventor Hee-cheol MOON). As set forth in Korean Patent Publication No. 10-2021-0047139, the foldable electronic device may include the dustproof structure to prevent or reduce infiltration of external foreign matter.

Various other aspects and effects provided by the plurality of structures and the electronic device including the same according to the various embodiments may be mentioned depending on embodiments in the detailed description of the disclosure.

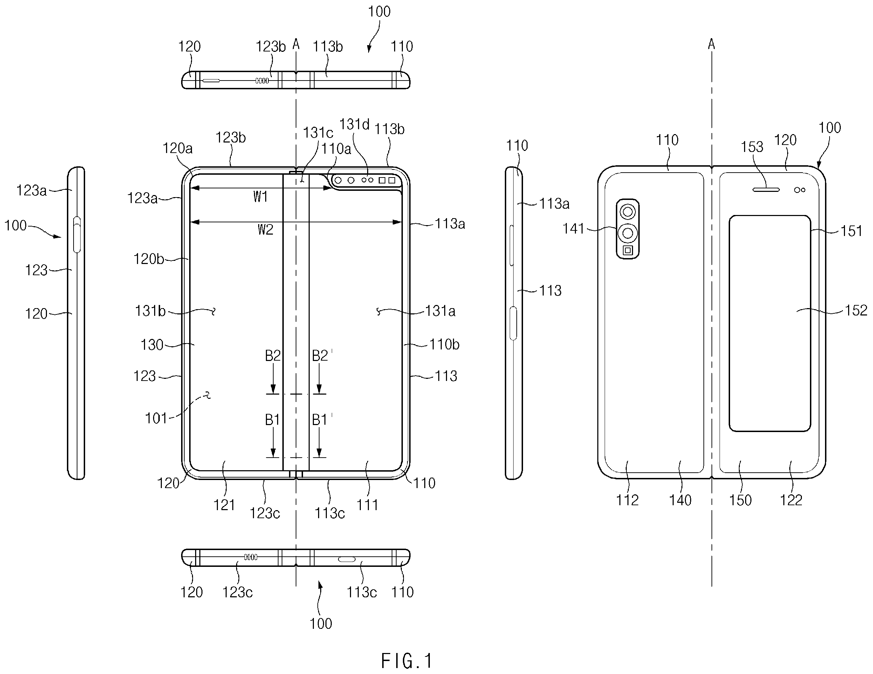

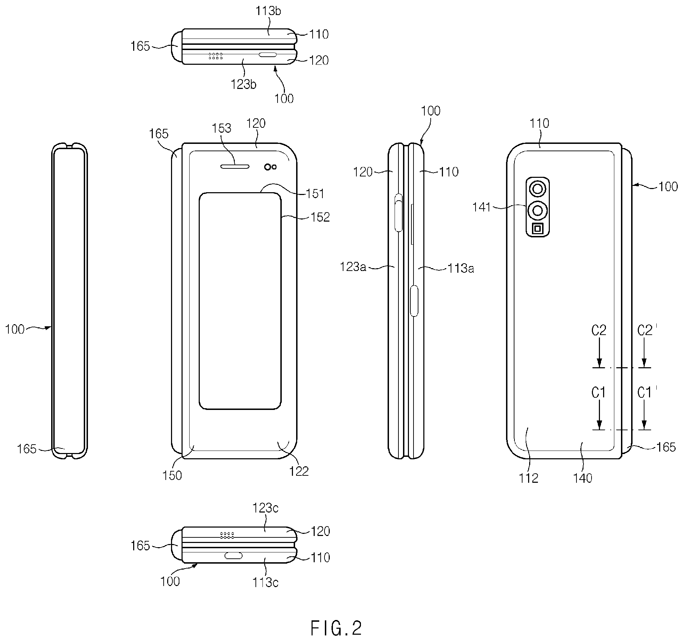

FIG. 1 is a view illustrating an unfolded state of an electronic device 100 according to an embodiment of the disclosure. FIG. 2 is a view illustrating a folded state of the electronic device 100 of FIG. 1 according to an embodiment of the disclosure.

In the detailed description below, a configuration in which a pair of housings are coupled by a hinge structure so as to be rotatable will be illustrated. However, it should be noted that this embodiment does not limit portable communication devices or electronic devices according to various embodiments of the disclosure. For example, the portable communication devices or the electronic devices according to the various embodiments of the disclosure may include two or more housings, and "a pair of housings" in the embodiments disclosed below may mean "two housings coupled to each other so as to be rotatable among the two or more housings".

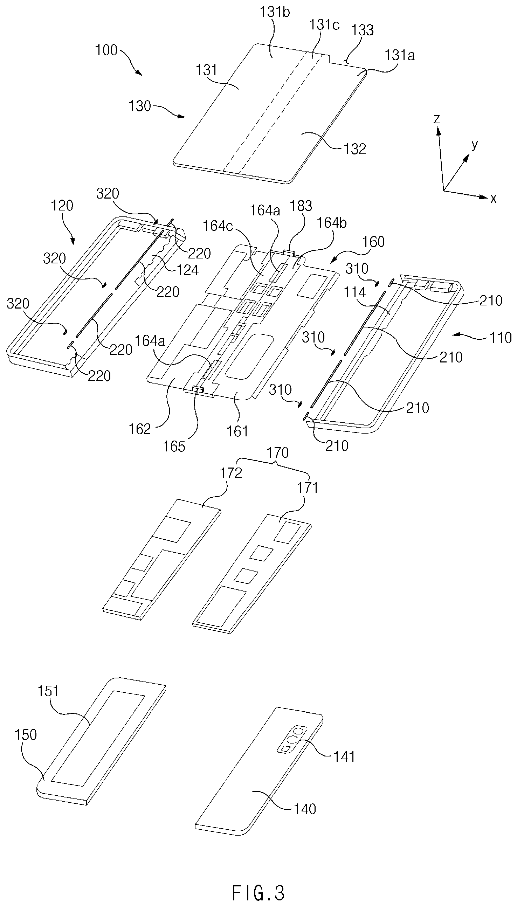

Referring to FIG. 1, the electronic device 100 (or, the foldable electronic device, the portable electronic device, the portable communication device, or the portable device) may include a pair of housings 110 and 120 rotatably coupled through a hinge structure (e.g., a hinge structure 164a of FIG. 3) so as to be folded relative to each other, a hinge housing 165 that covers foldable portions of the pair of housings 110 and 120, and a display 130 (e.g., a flexible display or a foldable display) disposed or accommodated in the space formed by the pair of housings 110 and 120. The hinge housing 165 may be located between at least a portion of the first housing 110 and at least a portion of the second housing 120. The hinge structure 164a may be disposed between the display 130 and the hinge housing 165 and may be connected to the first housing 110 and the second housing 120. In an embodiment, the electronic device 100 may include a foldable housing coupled so as to be rotatable from the position in which the pair of housings 110 and 120 are folded to face each other to the position in which the pair of housings 110 and 120 are unfolded to be disposed side by side with each other. In this disclosure, when the pair of housings 110 and 120 are unfolded to be disposed side by side with each other, the surface on which the display 130 is disposed may be defined as the front surface of the electronic device 100, and the surface facing away from the front surface may be defined as the rear surface of the electronic device 100. In addition, the surfaces surrounding the space between the front surface and the rear surface may be defined as the side surfaces of the electronic device 100.

In an embodiment, the pair of housings 110 and 120 may include the first housing 110 including a sensor area 131d, the second housing 120, a first back cover 140, and a second back cover 150. The pair of housings 110 and 120 of the electronic device 100 are not limited to the form and coupling illustrated in FIGS. 1 and 2 and may be implemented by a combination and/or coupling of other shapes or components. For example, in an embodiment, the first housing 110 and the first back cover 140 may be integrally formed with each other, and the second housing 120 and the second back cover 150 may be integrally formed with each other. In an embodiment, the first housing 110 may include the first back cover 140, and the second housing 120 may include the second back cover 150.

According to an embodiment, the first housing 110 and the second housing 120 may be disposed on the opposite sides of a first axis, for example, a folding axis A and may have entirely symmetrical shapes with respect to the folding axis A. In an embodiment, the first housing 110 and the second housing 120 may rotate about different folding axes relative to the hinge structure 164a or the hinge housing 165. For example, the first housing 110 and the second housing 120 may be coupled to the hinge structure 164a or the hinge housing 165 so as to be rotatable. According to an embodiment, by rotating about the folding axis A or the different folding axes, the first housing 110 and the second housing 120 may rotate between the position in which two different areas of the front surfaces are folded to face each other and the position in which the two different areas are inclined relative to each other or the position in which the two different areas are unfolded to be disposed side by side with each other.

The expression "located side by side" or "extended side by side" used herein may mean a state in which two structures are at least partially located next to each other or a state in which at least portions located next to each other are arranged in parallel. In an embodiment, the expression "disposed side by side" may mean that two structures are located next to each other and disposed to face in parallel directions or the same direction. In an embodiment, the expression "disposed side by side" may be interpreted as having a meaning including a state in which two structures are inclined relative to each other in the range of about 160 degrees to about 180 degrees. In the detailed description below, the expressions such as "side by side" and "in parallel" may be used. However, these expressions may be easily understood depending on the shapes or arrangement relationship of structures with reference to the accompanying drawings.

According to an embodiment, the angle or distance between the first housing 110 and the second housing 120 may vary depending on whether the electronic device 100 is in an unfolded state (or, a flat state or an open state), a folded state (or, a closed state), or an intermediate state. According to an embodiment, unlike the second housing 120, the first housing 110 may additionally include the sensor area 131d in which various sensors are disposed. However, the first housing 110 and the second housing 120 may have shapes symmetrical to each other in the other areas. In an embodiment, the sensor area 131d may be additionally disposed in, or replaced with, at least a partial area of the second housing 120.

In an embodiment, the first housing 110 may be connected to the hinge structure (e.g., the hinge structure 164a of FIG. 3) and may include a first surface 111 disposed to face toward the front surface of the electronic device 100 in the unfolded state of the electronic device 100, a second surface 112 facing away from the first surface 111, and a first side member 113 surrounding at least a portion of the space between the first surface 111 and the second surface 112. In an embodiment, the first side member 113 may include a first side surface 113a disposed parallel to the folding axis A, a second side surface 113b extending from one end of the first side surface 113a in a direction perpendicular to the folding axis A, and a third side surface 113c extending from an opposite end of the first side surface 113a in the direction perpendicular to the folding axis A. In describing various embodiments of the disclosure, the expression "parallel" or "perpendicular" is used in relation to the arrangement relationship between the above-described side surfaces. However, in some embodiments, the expression "parallel" or "perpendicular" may include the meaning of "partially parallel" or "partially perpendicular", or "substantially parallel" or "substantially perpendicular". In an embodiment, the expression "parallel" or "perpendicular" may have a meaning including an inclined arrangement relationship in the range of about 10 degrees or less.

In an embodiment, the second housing 120 may be connected to the hinge structure (e.g., the hinge structure 164a of FIG. 3) and may include a third surface 121 disposed to face toward the front surface of the electronic device 100 in the unfolded state of the electronic device 100, a fourth surface 122 facing away from the third surface 121, and a second side member 123 surrounding at least a portion of the space between the third surface 121 and the fourth surface 122. In an embodiment, the second side member 123 may include a fourth side surface 123a disposed parallel to the folding axis A, a fifth side surface 123b extending from one end of the fourth side surface 123a in a direction perpendicular to the folding axis A, and a sixth side surface 123c extending from an opposite end of the fourth side surface 123a in the direction perpendicular to the folding axis A. In an embodiment, the third surface 121 may be disposed to face the first surface 111 in the folded state. In an embodiment, although there is a slight difference in specific shape, the second side member 123 may have substantially the same shape as the first side member 113 or may be formed of the substantially the same material as that of the first side member 113.

In an embodiment, the electronic device 100 may include a receiving portion 101 formed to accommodate the display 130 through a structural shape coupling of the first housing 110 and the second housing 120. The receiving portion 101 may have substantially the same size as the display 130. **In** an embodiment, due to the sensor area 131d, the receiving portion 101 may have two or more different widths W1 and W2 in the direction perpendicular to the folding axis A. For example, the receiving portion 101 may have the first width W1 between a first portion 120a of the second housing 120 that is parallel to the folding axis A and a first portion 110a of the first housing 110 that is formed at the periphery of the sensor area 131d and the second width W2 formed by a second portion 120b of the second housing 120 and a second portion 110b of the first housing 110 that does not correspond to the sensor area 131d and is parallel to the folding axis A. In this case, the second width W2 may be greater than the first width W1. For example, the receiving portion 101 may have the first width W1 between the first portion 110a of the first housing 110 and the first portion 120a of the second housing 120 that have shapes asymmetrical to each other and the second width W2 between the second portion 110b of the first housing 110 and the second portion 120b of the second housing 120 that have shapes symmetrical to each other. In an embodiment, the first portion 110a and the second portion 110b of the first housing 110 may have different distances from the folding axis A. The width of the receiving portion 101 is not limited to the illustrated example. In an embodiment, the receiving portion 101 may have two or more different widths due to the shape of the sensor area 131d or the asymmetrically-shaped portions of the first housing 110 and the second housing 120.

In an embodiment, at least a portion of the first housing 110 and at least a portion of the second housing 120 may be formed of a metallic material or a non-metallic material that has a selected magnitude of rigidity to support the display 130. In an embodiment, at least a portion of the first housing 110 and at least a portion of the second housing 120 may include an electrically conductive material. When the first housing 110 and the second housing 120 include the electrically conductive material, the electronic device 100 may transmit and receive radio waves using the portions of the first and second housings 110 and 120 that are formed of the electrically conductive material. For example, a processor or a communication module of the electronic device 100 may perform wireless communication using a portion of the first housing 110 and a portion of the second housing 120.

In an embodiment, the sensor area 131d may have a certain area adjacent to one corner of the first housing 110. However, the arrangement, shape, or size of the sensor area 131d is not limited to the illustrated example. For example, in an embodiment, the sensor area 131d may be provided in another corner of the first housing 110 or in any area between an upper corner and a lower corner of the first housing 110. In an embodiment, the sensor area 131d may be disposed in at least a partial area of the second housing 120. In an embodiment, the sensor area 131d may be disposed to extend to the first housing 110 and the second housing 120. In an embodiment, the electronic device 100 may include components exposed on the front surface of the electronic device 100 though the sensor area 131d or one or more openings formed in the sensor area 131d and may perform various functions through the components. The components disposed in the sensor area 131d may include, for example, at least one of a front camera device, a proximity sensor, an illuminance sensor, an iris recognition sensor, an ultrasonic sensor, or an indicator.

In an embodiment, the first back cover 140 may be disposed on the second surface 112 of the first housing 110 and may have a substantially rectangular periphery. In an embodiment, the periphery of the first back cover 140 may be at least partially surrounded by the first housing 110. Similarly, the second back cover 150 may be disposed on the fourth surface 122 of the second housing 120, and at least a portion of the periphery of the second back cover 150 may be surrounded by the second housing 120.

In the illustrated embodiment, the first back cover 140 and the second back cover 150 may have substantially symmetrical shapes with respect to the folding axis A. In an embodiment, the first back cover 140 and the second back cover 150 may include various different shapes. In an embodiment, the first back cover 140 may be integrally formed with the first housing 110, and the second back cover 150 may be integrally formed with the second housing 120.

In an embodiment, the first back cover 140, the second back cover 150, the first housing 110, and the second housing 120 may provide, through a mutually coupled structure, a space in which various components (e.g., a printed circuit board, an antenna module, a sensor module, or a battery) of the electronic device 100 are disposed. In an embodiment, one or more components may be disposed, or visually exposed, on the rear surface of the electronic device 100. For example, one or more components or sensors may be visually exposed through a first rear area 141 of the first back cover 140. In an embodiment, the sensors may include a proximity sensor, a rear camera device, and/or a flash. In an embodiment, at least a portion of a sub-display 152 may be visually exposed through a second rear area 151 of the second back cover 150.

The display 130 may be disposed in the space formed by the pair of housings 110 and 120. For example, the display 130 may be seated in the receiving portion (e.g., the receiving portion 101 of FIG. 1) formed by the pair of housings 110 and 120 and may be disposed to substantially occupy most of the front surface of the electronic device 100. For example, the front surface of the electronic device 100 may include the display 130, a partial area (e.g., a peripheral area) of the first housing 110 that is adjacent to the display 130, and a partial area (e.g., a peripheral area) of the second housing 120 that is adjacent to the display 130. In an embodiment, the rear surface of the electronic device 100 may include the first back cover 140, a partial area (e.g., a peripheral area) of the first housing 110 that is adjacent to the first back cover 140, the second back cover 150, and a partial area (e.g., a peripheral area) of the second housing 120 that is adjacent to the second back cover 150.

In an embodiment, the display 130 may refer to a display, at least a partial area of which is able to be deformed to be flat or curved. In an embodiment, the display 130 may include a folding portion 131c, a first portion 131a disposed on one side of the folding portion 131c (e.g., on the right side of the folding portion 131c), and a second portion 131b disposed on an opposite side of the folding portion 131c (e.g., on the left side of the folding portion 131c). For example, the first portion 131a may be disposed on the first surface 111 of the first housing 110, and the second portion 131b may be disposed on the third surface 121 of the second housing 120. For example, the display 130 may extend from the first surface 111 to the third surface 121 across the hinge housing 165 or the hinge structure 164a of FIG. 3, and at least a portion (e.g., the folding portion 131c) corresponding to the hinge housing 165 or the hinge structure 164a may be a flexible portion that is able to be deformed from a flat shape to a curved shape.

In an embodiment, the division of the display 130 into the areas is illustrative, and the display 130 may be divided into a plurality of areas (e.g., four or more areas, or two areas) depending on the structure or function of the display 130. For example, in the embodiment illustrated in FIG. 1, the folding portion 131c may extend in the direction of a vertical axis (e.g., the y-axis of FIG. 3) parallel to the folding axis A, and the display 130 may be divided into areas by the folding portion 131c or the folding axis A. However, in an embodiment, the display 130 may be divided into areas with respect to another folding portion (e.g., a folding portion parallel to a horizontal axis (e.g., the x-axis of FIG. 3)) or another folding axis (e.g., a folding axis parallel to the x-axis of FIG. 3). The above-described division of the display 130 into the areas is only a physical division by the pair of housings 110 and 120 and a hinge structure (e.g., the hinge housing 165 or the hinge structure 164a of FIG. 3), and substantially one display 130 may be disposed in the area or space provided by the pair of housings 110 and 120 and the hinge structure (e.g., the hinge housing 165 or the hinge structure 164a of FIG. 3) and may display one full screen.

According to an embodiment, the first portion 131a and the second portion 131b may have shapes entirely symmetrical to each other with respect to the folding portion 131c. However, unlike the second portion 131b, the first portion 131a may include a notch area (e.g., a notch area 133 of FIG. 3) that provides the sensor area 131d, and in the other areas, the first portion 131a may have a shape symmetrical to that of the second portion 131b. For example, the first portion 131a and the second portion 131b may include portions having shapes symmetrical to each other and portions having shapes asymmetrical to each other.

Referring further to FIG. 3, the hinge housing 165 may be disposed between the first housing 110 and the second housing 120 and may hide an internal component (e.g., the hinge structure 164a of FIG. 3). In an embodiment, depending on an operational state (e.g., the unfolded state or the folded state) of the electronic device 100, the hinge housing 165 may be hidden by a portion of the first housing 110 and a portion of the second housing 120 or may be exposed to the outside. For example, the hinge housing 165 may be more exposed to the outside in the folded state than in the unfolded state.

Hereinafter, operations of the first housing 110 and the second housing 120 and the areas of the display 130 depending on operational states (e.g., the unfolded state and the folded state) of the electronic device 100 will be described.

In an embodiment, when the electronic device 100 is in the unfolded state (e.g., the state of FIG. 1), the first housing 110 and the second housing 120 may form an angle of 180 degrees, and the first portion 131a and the second portion 131b of the display 130 may be disposed to face in the same direction, for example, to display a screen in directions parallel to each other. In addition, the folding portion 131c may form the same plane as the first portion 131a and the second portion 131b.

In an embodiment, when the electronic device 100 is in the folded state (e.g., the state of FIG. 2), the first housing 110 and the second housing 120 may be disposed to face each other. For example, when the electronic device 100 is in the folded state (e.g., the state of FIG. 2), the first portion 131a and the second portion 131b of the display 130 may form a narrow angle (e.g., an angle between 0 degrees and 10 degrees) and may face each other. When the electronic device 100 is in the folded state (e.g., the state of FIG. 2), at least a portion of the folding portion 131c may form a curved surface having a certain curvature.

In an embodiment, when the electronic device 100 is in the intermediate state, the first housing 110 and the second housing 120 may be disposed to form a certain angle, for example, an angle of 90 degrees or 120 degrees. For example, in the intermediate state, the first portion 131a and the second portion 131b of the display 130 may form an angle greater than that in the folded state and smaller than that in the unfolded state. At least a portion of the folding portion 131c may form a curved surface having a certain curvature. In this case, the curvature may be smaller than that in the folded state.

FIG. 3 is an exploded perspective view of the portable communication device or electronic device 100 according to an embodiment of the disclosure.

Referring to FIG. 3, in an embodiment, the electronic device 100 may include the display 130, a support member assembly 160, at least one printed circuit board 170, the first housing 110, the second housing 120, the first back cover 140, and the second back cover 150. In this disclosure, the display 130 may be referred to as a display module or a display assembly.

The display 130 may include a display panel 131 (e.g., a flexible display panel) and at least one plate 132 or layer on which the display panel 131 is seated. In an embodiment, the plate 132 may be disposed between the display panel 131 and the support member assembly 160. The display panel 131 may be disposed on at least a portion of one surface of the plate 132 (e.g., a surface facing in the Z-direction in FIG. 3). The plate 132 may be formed in a shape corresponding to the display panel 131. For example, a partial area of the plate 132 may be formed in a shape corresponding to the notch area 133 of the display panel 131.

The support member assembly 160 may include a first support member 161, a second support member 162, the hinge structure 164a disposed between the first support member 161 and the second support member 162, the hinge housing 165 covering the hinge structure 164a when the hinge structure 164a is viewed from the outside, and a wiring member (e.g., a flexible printed circuit board (FPCB)) crossing the first support member 161 and the second support member 162. In an embodiment, the support member assembly 160 may include a first hinge plate 164b mounted on the first support member 161 and a second hinge plate 164c mounted on the second support member 162. In an embodiment, the wiring member may be disposed in a direction (e.g., the x-axis direction) crossing the first support member 161 and the second support member 162. The wiring member may be hidden by the first hinge plate 164b or the second hinge plate 164c and may not be illustrated in FIG. 3.

According to an embodiment, the first hinge plate 164b may be mounted inside the first housing 110, and the second hinge plate 164c may be mounted inside the second housing 120. In an embodiment, the first hinge plate 164b may be directly mounted on the first support member 161, and the second hinge plate 164c may be directly mounted on the second support member 162. In an embodiment, the first hinge plate 164b (or, the second hinge plate 164c) may be directly mounted on another structure (e.g., a first rotation support surface 114 or a second rotation support surface 124) inside the first housing 110 (or, the second housing 120). For example, the structure on which the first hinge plate 164b (or, the second hinge plate 164c) is mounted inside the first housing 110 (or, the second housing 120) may vary depending on embodiments. In an embodiment, the hinge structure 164a may be mounted on the first hinge plate 164b and the second hinge plate 164c and may rotatably connect the second hinge plate 164c to the first hinge plate 164b. For example, a folding axis (e.g., the folding axis A of FIG. 1) may be formed by the hinge structure 164a, and the first housing 110 and the second housing 120 (or, the first support member 161 and the second support member 162) may substantially rotate about the folding axis A relative to each other.

In an embodiment, the support member assembly 160 may be disposed between the plate 132 and the at least one printed circuit board 170. For example, the first support member 161 may be disposed between the first portion 131a of the display 130 and a first printed circuit board 171. The second support member 162 may be disposed between the second portion 131b of the display 130 and a second printed circuit board 172.

As mentioned above, the at least one printed circuit board 170 may include the first printed circuit board 171 disposed on one side of the first support member 161 and the second printed circuit board 172 disposed on one side of the second support member 162. The first printed circuit board 171 and the second printed circuit board 172 may be disposed in the space formed by the support member assembly 160, the first housing 110, the second housing 120, the first back cover 140, and the second back cover 150. Components for implementing various functions of the electronic device 100 may be disposed on the first printed circuit board 171 and the second printed circuit board 172.

In an embodiment, the first housing 110 and the second housing 120 may be assembled together so as to be coupled to the opposite sides of the support member assembly 160 in a state in which the display 130 is coupled to the support member assembly 160. The first housing 110 and the second housing 120 may be slidably coupled to the opposite sides of the support member assembly 160, for example, the first support member 161 and the second support member 162, respectively. The first support member 161 and the second support member 162 may be substantially accommodated in the first housing 110 and the second housing 120 and may be interpreted as a portion of the first housing 110 and a portion of the second housing 120 in some embodiments.

In an embodiment, the first housing 110 may include the first rotation support surface 114, and the second housing 120 may include the second rotation support surface 124 corresponding to the first rotation support surface 114. The first rotation support surface 114 and the second rotation support surface 124 may include a curved surface corresponding to a curved surface included in the hinge housing 165.

In an embodiment, when the electronic device 100 is in the unfolded state (e.g., the state of FIG. 1), the first rotation support surface 114 and the second rotation support surface 124 may cover the hinge housing 165 such that the hinge housing 165 is not exposed, or is minimally exposed, on the rear surface of the electronic device 100. In an embodiment, when the electronic device 100 is in the folded state (e.g., the state of FIG. 2), the first rotation support surface 114 and the second rotation support surface 124 may rotate along the curved surface included in the hinge housing 165 such that the hinge housing 165 is maximally exposed on the rear surface of the electronic device 100.

**In** the detailed description above, ordinal numbers such as first and second are used to simply distinguish components such as the first housing 110, the second housing 120, the first side member 113, and the second side member 123. However, it should be noted that the disclosure is not limited by the description of the ordinal numbers. For example, although the sensor area 131d is illustrated as being formed in the first housing 110, the sensor area 131d may be formed in the second housing 120 or may be formed in both the first housing 110 and the second housing 120. Although the first rear area 141 and the sub-display 152 are illustrated as being disposed on the first back cover 140 and the second back cover 150, respectively, both the first rear area 141 for placing a sensor and the sub-display 152 for outputting a screen may be disposed on one of the first back cover 140 and the second back cover 150.

In the detained description below, the electronic device 100 of FIGS. 1 to 3 may be referred to as needed. In describing the following embodiments, components identical to those in the prior embodiments or capable of being easily understood through the prior embodiments will be assigned with the identical reference numerals or will not be assigned with reference numerals, and detailed description thereof will also be omitted.

According to an embodiment, the electronic device 100 may include a plurality of structures 210, 310, 220, and 320 provided between the hinge housing 165 and the first or second housing 110 or 120. According to an embodiment, the plurality of structures may include at least one first structure 210, at least one second structure 310, at least one third structure 220, and at least one fourth structure 320.

At least one of the first structure 210 or the third structure 220 may be a structure that blocks or reduces infiltration of foreign matter in the form of solid particle, such as dust or chip, or liquid. For example, the first structure 210 and the third structure 220 may be dustproof structures (or, sweepers or fiber structures) that block or reduce infiltration of foreign matter in the form of solid particle or liquid into the electronic device 100.

At least one of the second structure 310 or the fourth structure 320 may be a structure that maintains the gap between at least one of the first housing 110 or the second housing 120 and the hinge housing 165. For example, the second structure 310 may be a support structure (or, a spacer or a gap maintaining member) that maintains the gap between the first housing 110 and the hinge housing 165, and the fourth structure 320 may be a support structure (or, a spacer or a gap maintaining member) that maintains the gap between the second housing 120 and the hinge housing 165. At least one of the second structure 310 or the fourth structure 320 may be formed of a material having lubrication performance and may provide wear resistance performance and a smooth operation feeling suitable for a folding life determined by repeated folding and unfolding operations of the electronic device. The second structure 310 and the fourth structure 320 may be formed of a material that is non-polar and has low surface energy and lubrication performance. For example, the second structure 310 and the fourth structure 320 may be formed of a resin such as POM, UHMWPE, PTFE, and/or PEEK.

According to an embodiment, the first structure 210 may make contact with the second structure 310 or may be spaced apart from the second structure 310 by a distance smaller than the length of the second structure 310. The third structure 220 may make contact with the fourth structure 320 or may be spaced apart from the fourth structure 320 by a distance smaller than the length of the fourth structure 320.

According to an embodiment, at least one of the first structure 210, the second structure 310, the third structure 220, or the fourth structure 320 may be formed of a material having elasticity, may accumulate elastic force while being compressed by an elastic force, and may return to the initial shape when no external force is applied. For example, the second structure 310 and the fourth structure 320 may include an elastic material and may suppress or alleviate noise or wear caused by friction during an operation of the electronic device.

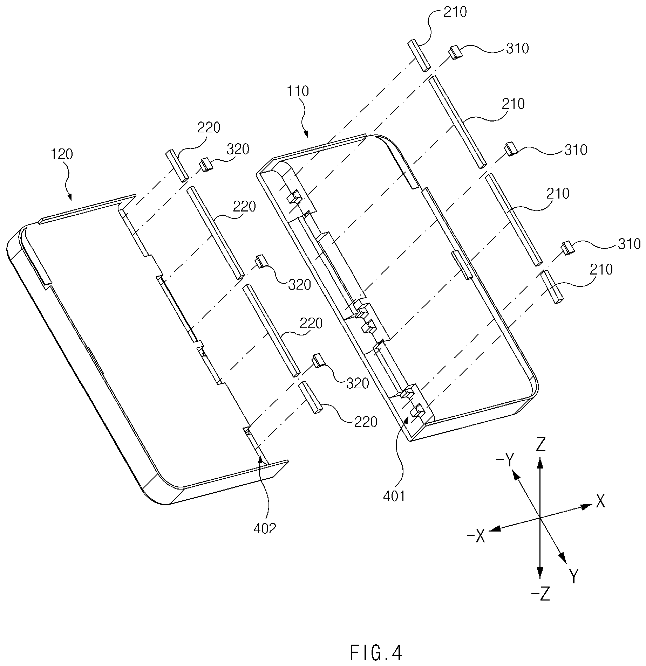

FIG. 4 is an exploded perspective view illustrating a configuration in which the plurality of structures are mounted in the electronic device according to an embodiment.

Referring to FIG. 4, the electronic device 100 (or, the foldable electronic device, the portable electronic device, the portable communication device, or the portable device) according to an embodiment may include the first housing 110, the second housing 120, the first structure 210, the second structure 310, the third structure 220, and the fourth structure 320.

The first housing 110 may include a first seating portion 401 corresponding to the outer circumferential surface of the hinge housing (e.g., the hinge housing 165 of FIGS. 2 and 3). The first seating portion 401 may have a concave shape when viewed from the z-axis direction to the -z-axis direction. The first seating portion 401 may be formed long along the folding axis A (e.g., the folding axis A in FIG. 1). The first seating portion 401 may overlap at least a portion of the hinge housing with a constant gap therebetween or may be disposed adjacent to the hinge housing depending on a hinge operation of the hinge structure (or, a folding operation of the electronic device). At least one first structure 210 and at least one second structure 310 may be disposed in at least a portion of the first seating portion 401.

The second housing 120 may include a second seating portion 402 corresponding to the outer circumferential surface of the hinge housing. The second seating portion 402 may have a concave shape when viewed from the z-axis direction to the -z-axis direction. The second seating portion 402 may be formed long along the folding axis A (e.g., the folding axis A in FIG. 1). The second seating portion 402 may overlap at least a portion of the hinge housing with a constant gap therebetween or may be disposed adjacent to the hinge housing depending on a hinge operation of the hinge structure (or, a folding operation of the electronic device). At least one third structure 220 and at least one fourth structure 320 may be disposed in at least a portion of the second seating portion 402.

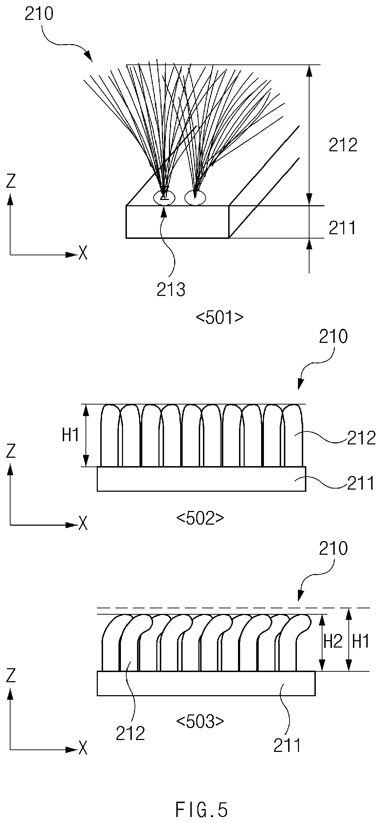

FIG. 5 is a view illustrating an example of the first structure according to an embodiment. In FIG. 5, drawing <501> is a view illustrating an example of a perspective view of the first structure, drawing <502> is a view illustrating an example of a state before a fiber member of the first structure is pressed, and drawing <503> is a view illustrating an example of a state in which the fiber member of the first structure is pressed.

Referring to FIG. 5, as illustrated in drawings <501>, <502>, and <503>, the first structure (or, the third structure 220) may include a fiber member 212 (or, a bundle of fibers or a cilia member) and a base member 211.

The base member 211 may be formed of, for example, plastic, a polymer, and/or fiber and may have a plate shape having a constant thickness. The fiber member 212 may be woven and disposed in a certain arrangement on the base member 211. The base member 211 may have a width parallel to the X-axis and a length parallel to the Y-axis (or, the folding axis).

According to an embodiment, an adhesive member (e.g., a double-sided tape or a liquid adhesive material) may be disposed on the bottom of the base member 211 and may fix the base member 211 to the first seating portion (e.g., the first seating portion 401 of FIG. 4) and the second seating portion (e.g., the second seating portion 402 of FIG. 4).

The fiber member 212 may be constituted by a plurality of assemblies, each of which includes a plurality of fibers, and the assemblies may be inserted into recesses or holes 213 arranged in a certain pattern in the base member 211. One assembly may be fixedly inserted into one recess or hole 213. Each of the assemblies may include a certain number of fibers, and the assemblies may include the same or similar number of fibers. According to an embodiment, the number of fibers constituting each assembly may vary depending on the size, shape, or pattern arrangement of the recesses or holes 213. At least portions of lower ends of the assemblies of the fiber member 212 may be inserted into the base member 211 or may protrude downward from the base member 211. The pattern of the recesses or holes 213 of the base member 211 into which the assemblies of the fiber member 212 are fixedly inserted may have various arrangements including a zigzag pattern arrangement, a matrix or lattice arrangement, a mixture of a lattice arrangement and a zigzag pattern, a random arrangement, and/or a straight arrangement. According to an embodiment, the pattern of the recesses or holes 213 may include a concave-convex pattern.

At least portions of the assemblies of the fiber member 212 may be fixed to the base member 211, and the remaining portions of the assemblies may be arranged upward (in the Z-axis direction) with respect to the upper surface of the base member 211. The lower portions of the assemblies of the fiber member 212 (e.g., portions disposed relatively close to the base member 211) may be fixedly inserted while being concentrated on one side of the recesses or holes 213 formed in the base member 211, and the upper portions of the assemblies of the fiber member 212 (e.g., portions disposed relatively far away from the base member 211) may be arranged to have irregular gaps from adjacent fibers. According to an embodiment, the recesses or holes 213 of the base member 211 may be spaced apart from one another at intervals by which the fibers included in the fiber member 212 are capable of making contact with one other in the lengthwise direction of the base member 211 (e.g., the Y-axis direction). The upper surface of the fiber member 212 may have a constant height. Since the lower portion of the fiber member 212 is concentrated in the base member 211 and the upper portion of the fiber member 212 is scattered, the fiber member 212 may be disposed in the shape of an inverted cone (a shape in which a wide side faces upward).

As illustrated in drawing <502>, the above-described first structure 210 may be disposed to have a constant height in the upward direction with respect to the base member 211. Thereafter, the first structure 210 may be disposed in the first seating portion (or, the second seating portion), and the hinge housing (e.g., the hinge housing 165 of FIGS. 2 and 3) may be placed on the first structure 210. For example, as illustrated in drawing <503>, at least a portion of the first structure 210 may have a state in which at least a portion of the upper surface is curved (the fibers of the fiber member 212 are curved by a height difference H1-H2). Even though the upper portion of the fiber member 212 of the first structure 210 is curved, the spaces between the fibers may be closed while the fibers of the fiber member 212 are entangled with one another, and the space between the hinge housing 165 and the first seating portion may be closed. Accordingly, even though the space between the first seating portion and the hinge housing 165 is deformed depending on a hinge operation of the hinge housing 165, the deformed space may be closed by the first structure 210, and thus infiltration of foreign matter from the outside may be blocked or reduced. The height of the fiber member 212 may vary depending on the size of the space between the hinge housing 165 and the first seating portion. The number of fibers constituting the assemblies of the fiber member 212 may be selected such that after the first structure 210 is seated in the first seating portion, the fibers are pressed by the hinge housing and the spaces between the fibers are closed. In addition, the number of fibers constituting one assembly may vary depending on the thickness (or, diameter) of the fibers. Alternatively, the material, elasticity, and diameter of the fibers may be determined such that the original shape of the fiber member 212 is maintained even though a hinge operation of the electronic device 100 is performed more than a specified number of times (e.g., more than 20,000 times), and according to the determination, the number of fibers of an assembly concentrated in one recess or hole 213 may be determined. For example, at least one of various fibers including artificial fibers, natural fibers, optical fibers, and/or glass fibers may be employed as the fibers of the fiber member 212, and mixed fibers may be employed as needed.

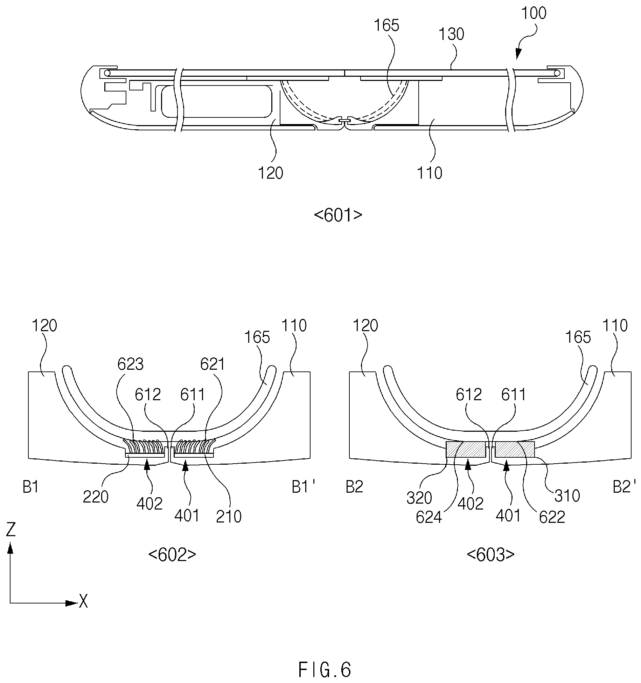

FIG. 6 is a view illustrating an unfolded state of the electronic device according to an embodiment. In FIG. 6, drawing <601> is a view illustrating the unfolded state of the electronic device illustrated in FIG. 1. In FIG. 6, drawing <602> is a view illustrating an example of a section of the electronic device taken along line B1-B1' in FIG. 1. For example, drawing <602> is a view illustrating an example of a section obtained by cutting the place where the dustproof structures of the electronic device are disposed. In FIG. 6, drawing <603> is a view illustrating an example of a section of the electronic device taken along line B2-B2' in FIG. 1. For example, drawing <603> is a view illustrating an example of a section obtained by cutting the place where the support structures of the electronic device are disposed.

Referring to FIG. 6, the electronic device 100 may include the first housing 110, the second housing 120, the hinge housing 165, the display 130, the first structure 210, and the second structure 310.

The first housing 110 may include the first seating portion 401 and a first seating protrusion 611. The first seating protrusion 611 may protrude in the Z-axis direction. The first seating protrusion 611 may be formed long in the arrangement direction of the folding axis (e.g., the folding axis A of FIG. 1) and/or the plurality of first structures 210 and/or in the arrangement direction of the plurality of second structures 310. The first seating portion 401 may be disposed adjacent to the first seating protrusion 611, and thus the first seating protrusion 611 may limit the positions of the first structure 210 and the second structure 310 seated in the first seating portion 401.

The second housing 120 may include the second seating portion 402 and a second seating protrusion 612. The second seating protrusion 612 may protrude in the Z-axis direction. The second seating protrusion 612 may be formed long in the arrangement direction of the folding axis (e.g., the folding axis A of FIG. 1) and/or the plurality of second structures 310 and/or in the arrangement direction of the plurality of fourth structures 320. The second seating portion 402 may be disposed adjacent to the second seating protrusion 612, and thus the second seating protrusion 612 may limit the positions of the second structure 310 and the fourth structure 320 seated in the second seating portion 402.

When the electronic device 100 is in the unfolded state (the open state), the display 130 may have a substantially flat state. The display 130 may be disposed in the space formed by the first housing 110 and the second housing 120. The plurality of structures 210, 310, 220, and 320 may be disposed under the hinge housing 165 that covers the foldable portions of the first housing 110 and the second housing 120. The first structure 210 and the second structure 310 may be disposed between the hinge housing 165 and the first housing 110. The third structure 220 and the fourth structure 320 may be disposed between the hinge housing 165 and the second housing 120.

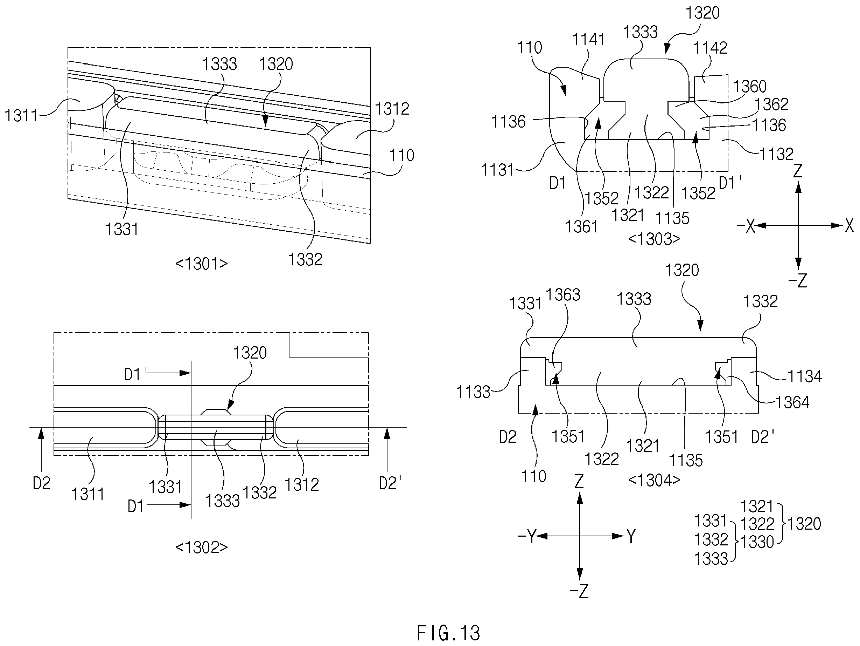

When the electronic device 100 is in the unfolded state (the open state), a portion of the outer surface (or, the rear surface or the outside) (e.g., the surface facing in the -Z-axis direction) of the hinge housing 165 may be placed on the first structure 210 and the third structure 220. When the electronic device 100 is in the unfolded state (the open state), the first structure 210 may be disposed between the inner surface (or, the front surface, the inside, or the surface facing in the +Z-axis direction) of the first housing 110 (e.g., a seating surface 1135 of FIG. 13) and the outer surface of the hinge housing 165. When the electronic device 100 is in the unfolded state (the open state), the third structure 220 may be disposed between the inner surface of the second housing 120 and the outer surface of the hinge housing 165. The first seating protrusion 611 and the second seating protrusion 612 may be disposed to face each other. The fiber member of the first structure 210 seated in the first seating portion 401 and the fiber member of the third structure 220 seated in the second seating portion 402 may be disposed to face in the Z-axis direction. The upper ends of the fiber members of the first structure 210 and the third structure 220 may be pressed by the rear surface of the hinge housing 165, and thus the fiber members may be curved in certain directions. When the electronic device 100 is in the unfolded state, all (or, more than a certain percentage) of the upper surfaces of the first structure 210 and the third structure 220 may be curved by the rear surface of the hinge housing 165.

When the electronic device 100 is in the unfolded state, at least a portion of the rest of the outer surface of the hinge housing 165 may be placed on the second structure 310 and the fourth structure 320. When the electronic device 100 is in the unfolded state (the open state), the second structure 310 may be disposed between the inner surface of the first housing 110 and the outer surface of the hinge housing 165. When the electronic device 100 is in the unfolded state (the open state), the fourth structure 320 may be disposed between the inner surface of the second housing 120 and the outer surface of the hinge housing 165. The first seating protrusion 611 and the second seating protrusion 612 may be disposed to face each other. The second structure 310 seated in the first seating portion 401 and the fourth structure 320 seated in the second seating portion 402 may be disposed adjacent to each other. The second structure 310 seated in the first seating portion 401 and the fourth structure 320 seated in the second seating portion 402 may make contact with the hinge housing 165. The second structure 310 seated in the first seating portion 401 and the fourth structure 320 seated in the second seating portion 402 may be brought into close contact with the hinge housing 165 and may maintain a constant gap between each of the first housing 110 and the second housing 120 and the hinge housing 165.

According to an embodiment, in the unfolded state of the electronic device, the first structure 210 may face a first portion 621 of the outer surface (e.g., the rear surface or the outside) of the hinge housing 165. In the unfolded state of the electronic device, the first structure 210 may make contact with at least a portion of the first portion 621 of the outer surface of the hinge housing 165. In the unfolded state of the electronic device, the second structure 310 may face a second portion 622 of the outer surface of the hinge housing 165 that is different from the first portion 621. In the unfolded state of the electronic device, the second structure 310 may make contact with at least a portion of the second portion 622 of the outer surface of the hinge housing 165.

In the unfolded state of the electronic device, the third structure 220 may face a third portion of the outer surface of the hinge housing 165. The third portion 623 may be a portion different from the first portion 621 and the second portion 622 and may be a portion symmetrical to the first portion 621 with respect to the folding axis A (or, the hinge housing 165). In the unfolded state of the electronic device, the third structure 220 may make contact with at least a portion of the third portion 623 of the outer surface of the hinge housing 165. In the unfolded state of the electronic device, the fourth structure 320 may face a fourth portion 624 of the outer surface of the hinge housing 165. The fourth portion 624 may be a portion different from the first portion 621, the second portion 622, and the third portion 623 and may be a portion symmetrical to the second portion 622 with respect to the folding axis A (or, the hinge housing 165). In the unfolded state of the electronic device, the fourth structure 320 may make contact with at least a portion of the fourth portion 624 of the outer surface of the hinge housing 165.

According to an embodiment, at least a portion of at least one first structure 210 may be brought into contact with the first portion 621 of the outer surface of the hinge housing 165 while the electronic device 100 is changed from the unfolded state to a folded state. At least a portion of at least one second structure 310 may be brought into contact with the second portion 622 of the outer surface of the hinge housing 165 while the electronic device 100 is changed from the unfolded state to the folded state. At least a portion of at least one third structure 220 may be brought into contact with the third portion 623 of the outer surface of the hinge housing 165 while the electronic device 100 is changed from the unfolded state to the folded state. At least a portion of at least one fourth structure 320 may be brought into contact with the fourth portion 624 of the outer surface of the hinge housing 165 while the electronic device 100 is changed from the unfolded state to the folded state.

According to an embodiment, the space between the first housing 110 and the hinge housing 165 may be sealed by the first structure 210 and the second structure 310, and thus infiltration of external foreign matter between the first housing 110 and the hinge housing 165 may be prevented or reduced. The space between the second housing 120 and the hinge housing 165 may be sealed by the third structure 220 and the fourth structure 320, and thus infiltration of external foreign matter between the second housing 120 and the hinge housing 165 may be prevented or reduced.

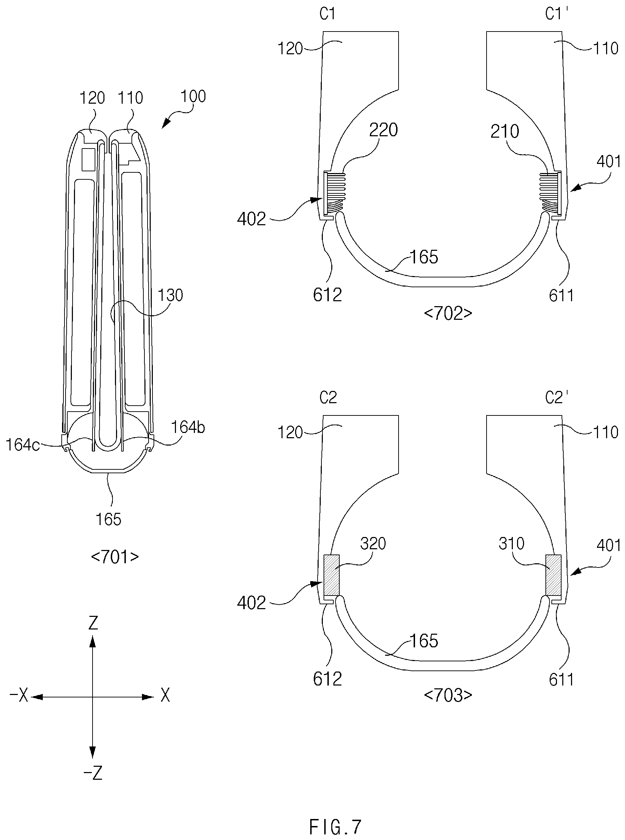

FIG. 7 is a view illustrating a folded state of the electronic device according to an embodiment. In FIG. 7, drawing <701> is a view illustrating the folded state of the electronic device illustrated in FIG. 2. In FIG. 7, drawing <702> is a view illustrating an example of a section of the electronic device taken along line C1-C1' in FIG. 2. For example, drawing <702> is a view illustrating an example of a section obtained by cutting the place where the dustproof structures of the electronic device are disposed. In FIG. 7, drawing <703> is a view illustrating an example of a section of the electronic device taken along line C2-C2' in FIG. 2. For example, drawing <703> is a view illustrating an example of a section obtained by cutting the place where the support structures of the electronic device are disposed.

Referring to FIGS. 6 and 7, when the electronic device 100 is in the folded state, the display 130 may have a state in which the folding portion (e.g., the folding portion 131c of FIGS. 1 and 3) is folded. The first hinge plate 164b and the second hinge plate 164c that are disposed under the display 130 and that support the display 130 may be separated from each other and may be disposed in an upright state in the Z-axis direction. The rear surface of the first housing 110 and the rear surface of the second housing 120 may be disposed to face away from each other. The first seating protrusion 611 and the second seating protrusion 612 may be spaced apart from each other with the hinge housing 165 therebetween.

When the electronic device 100 is in the folded state, the first structure 210 may be disposed above the first seating protrusion 611 in the Z-axis direction, and the third structure 220 may be disposed above the second seating protrusion 612 in the Z-axis direction. The first structure 210 may be disposed to face one edge (an edge facing in the X-axis direction) of the hinge housing 165, and the third structure 220 may be disposed to face an opposite edge (an edge facing in the -X-axis direction) of the hinge housing 165. Accordingly, some of the fiber members of the first structure 210 may remain in an upright state, and the other fiber members may face the one edge of the hinge housing 165 and may be curved. Some of the fiber members of the third structure 220 may remain in an upright state, and the other fiber members may face the opposite edge of the hinge housing 165 and may be curved. The first structure 210 may close the gap between the first housing 110 and the hinge housing 165, and the third structure 220 may close the gap between the second housing 120 and the hinge housing 165. Accordingly, infiltration of foreign matter through the gap between each of the first housing 110 and the second housing 120 and the hinge housing 165 may be prevented or reduced.

When the electronic device 100 is in the folded state (the closed state), the second structure 310 may be disposed above the first seating protrusion 611 in the Z-axis direction, and the fourth structure 320 may be disposed above the second seating protrusion 612 in the Z-axis direction. The second structure 310 may be disposed to face the one edge (the edge facing in the X-axis direction) of the hinge housing 165, and the fourth structure 320 may be disposed to face the opposite edge (the edge facing in the -X-axis direction) of the hinge housing 165. The second structure 310 may make contact with the one edge of the hinge housing 165, and the fourth structure 320 may make contact with the opposite edge of the hinge housing 165. Accordingly, the second structure 310 may close the gap between the first housing 110 and the hinge housing 165, and the fourth structure 320 may close the gap between the second housing 120 and the hinge housing 165. Thus, infiltration of foreign matter through the gap between each of the first housing 110 and the second housing 120 and the hinge housing 165 may be prevented or reduced.

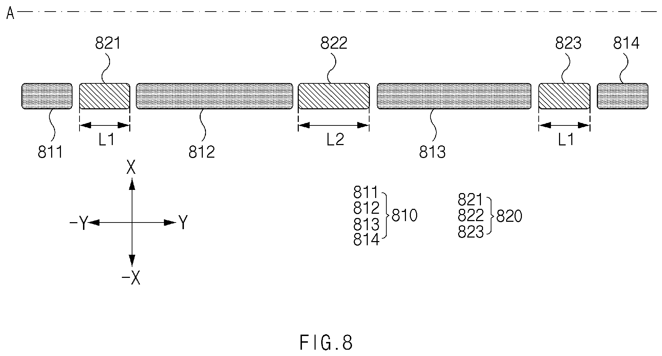

Hereinafter, the first structure 210 (or, the third structure 220) and the second structure 310 (or, the fourth structure 320) formed between the hinge housing 165 and the first housing 110 (or, the second housing 120) will be described with reference to FIGS. 8 to 22.

FIG. 8 is a view illustrating an example of the first structure and the second structure of the electronic device according to an embodiment.

Referring to FIG. 8, the electronic device according to an embodiment may include a first structure 810 (e.g., the first structure 210 of FIGS. 3 to 7) (and/or, the third structure of FIGS. 3 to 7 (e.g., the third structure 220)) that includes one or more dustproof structures 811, 812, 813, and 814 and a second structure 820 (e.g., the second structure 310 of FIGS. 3 to 7) (and/or, the fourth structure (e.g., the fourth structure 320 of FIGS. 3 to 7)) that includes one or more support structures 821, 822, and 823.

The one or more support structures 821, 822, and 823 and the one or more dustproof structures 811, 812, 813, and 814 may be disposed in the lengthwise direction along the folding axis A. For example, the one or more support structures 821, 822, and 823 and the one or more dustproof structures 811, 812, 813, and 814 may be disposed in the lengthwise direction along the hinge housing (e.g., the hinge housing 165 of FIGS. 2, 3, 6, and 7).

The number of support structures 821, 822, and 823 may be different from the number of dustproof structures 811, 812, 813, and 814. The number of dustproof structures 811, 812, 813, and 814 may be greater than the number of support structures 821, 822, and 823. For example, the number of dustproof structures 811, 812, 813, and 814 may be at least one more than the number of support structures 821, 822, and 823.

The one or more support structures 821, 822, and 823 and the one or more dustproof structures 811, 812, 813, and 814 may be alternately arranged. The dustproof structures 811, 812, 813, and 814 may be disposed on the opposite sides of the hinge housing and may block or reduce infiltration of foreign matter through the opposite sides of the hinge housing.

According to an embodiment, the one or more dustproof structures 811, 812, 813, and 814 may include the first dustproof structure 811, the second dustproof structure 812, the third dustproof structure 813, and the fourth dustproof structure 814. The one or more support structures 821, 822, and 823 may include the first support structure 821, the second support structure 822, and the third support structure 823.

According to an embodiment, the first support structure 821 supporting one side of the hinge housing may be located between the first dustproof structure 811 and the second dustproof structure 812. The second support structure 822 supporting a central portion of the hinge housing may be located between the second dustproof structure 812 and the third dustproof structure 813. The third support structure 823 supporting an opposite side of the hinge housing may be located between the third dustproof structure 813 and the fourth dustproof structure 814. The second support structure 822 may be located between the first support structure 821 and the third support structure 823. The second support structure 822 corresponding to the central portion of the hinge housing may be formed to be longer than at least one of the first support structure 821 or the third support structure 823. The second support structure 822 may have a second length L2 longer than a first length L1 of at least one of the first support structure 821 or the third support structure 823. Since the second support structure 822 supporting the central portion of the hinge housing is formed to be longer than at least one of the first support structure 821 or the third support structure 823, the hinge housing may be firmly supported without sagging. For example, since the second support structure 822 supporting the central portion of the hinge housing is formed to be longer than at least one of the first support structure 821 or the third support structure 823, sagging of an area of the housing (e.g., the first housing 110 or the second housing 120) adjacent to the hinge housing 165 may be reduced.

According to an embodiment, the first dustproof structure 811 and the second dustproof structure 812 may make contact with the first support structure 821 or may be spaced apart from the first support structure 821 by a distance smaller than the length of the first support structure 821. The second dustproof structure 812 and the third dustproof structure 813 may make contact with the second support structure 822 or may be spaced apart from the second support structure 822 by a distance smaller than the length of the second support structure 822.

According to an embodiment, at least one of the first support structure 821, the second support structure 822, or the third support structure 823 may be formed in the form of sub-structures divided from one another. For example, the second support structure 822 longer than the first support structure 821 and the third support structure 823 may be formed in the form of sub-structures divided from one another. At least one of the sub-structures divided from one another may have a shorter length than the first support structure 821 and the third support structure 823.

According to an embodiment, the plurality of dustproof structures 811, 812, 813, and 814 and the plurality of support structures 821, 822, and 823 may be symmetrically arranged. The plurality of dustproof structures 811, 812, 813, and 814 included in the first structure 810 may be symmetrical to a plurality of dustproof structures included in a third structure with the folding axis A parallel to the lengthwise direction of the hinge housing therebetween. The plurality of support structures 821, 822, and 823 included in the second structure 820 may be symmetrical to a plurality of support structures included in a fourth structure with the folding axis A parallel to the lengthwise direction of the hinge housing therebetween.

According to an embodiment, the first dustproof structure 811 and the second dustproof structure 812 included in each of the first structure 810 and the third structure may be symmetrical to the third dustproof structure 813 and the fourth dustproof structure 814 with a virtual axis (or, the second support structure 822) perpendicular to the folding axis A therebetween. The first support structure 821 included in each of the second structure 820 and the fourth structure may be symmetrical to the third support structure 823 with the virtual axis (or, the second support structure 822) perpendicular to the folding axis A therebetween.

According to an embodiment, the arrangements, lengths, and/or numbers of dustproof structures 811, 812, 813, and 814 and support structures 821, 822, and 823 may be determined depending on the length of the hinge housing.

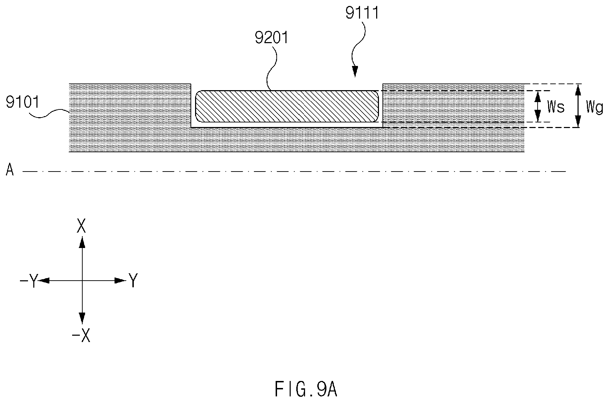

FIGS. 9A to 9F are views illustrating dustproof structures and support structures of the electronic device according to embodiments.

Referring to FIGS. 9A to 9F, the electronic device according to an embodiment may include at least one dustproof structure 9101, 9102, 9103, 9104, 9105, or 9125 (e.g., the dustproof structures 811, 812, 813, and 814 of FIG. 8) and at least one support structure 9201, 9202, 9203, 9204, 9205, or 9225 (e.g., the support structures 821, 822, and 823 of FIG. 8).

According to an embodiment, at least one first dustproof structure 9101 illustrated in FIG. 9A may include at least one dustproof recess 9111 formed by removing a portion of the first dustproof structure 9101. The at least one dustproof recess 9111 may be formed in an engraved shape toward the folding axis A (or, in the X-axis direction). At least one first support structure 9201 may be disposed in the dustproof recess 9111. For example, the width Ws of the first support structure 9201 may be narrower than the width Wg of the dustproof recess 9111. The width of a seating protrusion (e.g., the first seating protrusion 611 and the second seating protrusion 612 of FIGS. 6 and 7) that limits the position of the first support structure 9201 may be formed to be wide within the difference between the width Ws of the first support structure 9201 and the width Wg of the dustproof recess 9111 Accordingly, a force applied to the support structure 9201 due to the movement of the first housing (e.g., the first housing 110 of FIGS. 1 to 7) and the second housing (e.g., the second housing 120 of FIGS. 1 to 7) may be more easily received. For example, the width Ws of the first support structure 9201 may be equal to the width Wg of the dustproof recess 9111. One lateral end of the first support structure 9201 and an opposite lateral end of the seating protrusion may be aligned, and thus the first housing and the second housing that include the seating protrusion may be easily manufactured. For example, the width Ws of the first support structure 9201 may be greater than the width Wg of the dustproof recess 9111. As the width Ws of the first support structure 9201 is increased, the surface area of the support structure 9201 making contact with the hinge housing may be increased, and thus the support structure 9201 may firmly support the hinge housing. For example, since the surface area of the support structure 9201 making contact with the hinge housing 165 is increased as the width Ws of the first support structure 9201 is increased, the support structure 9201 may maintain a constant gap between the hinge housing and areas of the first housing 110 and/or the second housing 120 adjacent to the hinge housing when the first housing 110 and the second housing 120 perform a folding operation (or, in a closed state).

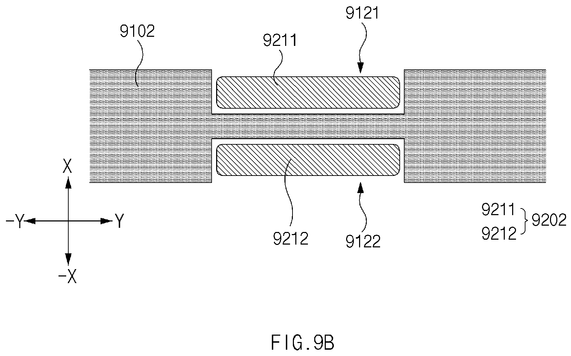

According to an embodiment, at least one first dustproof structure 9102 illustrated in FIG. 9B may include a plurality of dustproof recesses 9121 and 9122 formed by removing portions of the first dustproof structure 9102. The first dustproof recess 9121 and the second dustproof recess 9122 included in the plurality of dustproof recesses 9121 and 9122 may be formed in engraved shapes in opposite directions. The first dustproof recess 9121 may be formed in an engraved shape in the -X-axis direction. At least one first support structure 9211 may be disposed in the first dustproof recess 9121. The second dustproof recess 9122 may be formed in an engraved shape in the X-axis direction. At least one second support structure 9212 may be disposed in the second dustproof recess 9122. The first support structure 9211 and the second support structure 9212 may have the same size or different sizes. For example, the first support structure 9211 close to the folding axis and the second support structure 9212 far away from the folding axis may be formed in different sizes.

For example, the sizes of the plurality of support structures 9211 and 9212 may be determined depending on the directions of the housings corresponding to the support structures 9211 and 9212 (e.g., the first housing located on one side with respect to the folding axis or the second housing located on an opposite side with respect to the folding axis). The first support structure 9211 and the second support structure 9212 that are included in the second structure corresponding to the first housing and that have different sizes and the first support structure 9211 and the second support structure 9212 that are included in the fourth structure corresponding to the second housing and that have different sizes may be symmetrical to each other with the central axis of the hinge housing parallel to the folding axis therebetween.

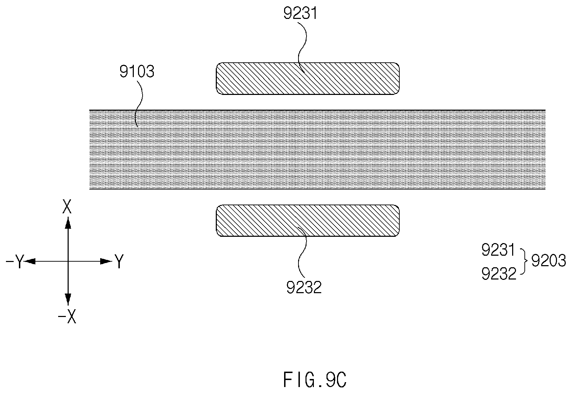

According to an embodiment, support structures 9231 and 9232 may be disposed on opposite sides of at least one dustproof structure 9103 illustrated in FIG. 9C, respectively. The first support structure 9231 may be disposed on one side of the dustproof structure 9103, and the second support structure 9232 may be disposed on an opposite side of the first dustproof structure 9103. The first support structure 9231 and the second support structure 9232 may have the same size or different sizes. The separation distance between the first support structure 9231 and the first dustproof structure 9103 may be equal to or different from the separation distance between the second support structure 9232 and the first dustproof structure 9103. The separation distances between the support structures 9231 and 9232 and the first dustproof structure 9103 may be determined depending on the directions of the housings corresponding to the support structures 9231 and 9232 (e.g., the first housing located on one side with respect to the folding axis or the second housing located on an opposite side with respect to the folding axis).

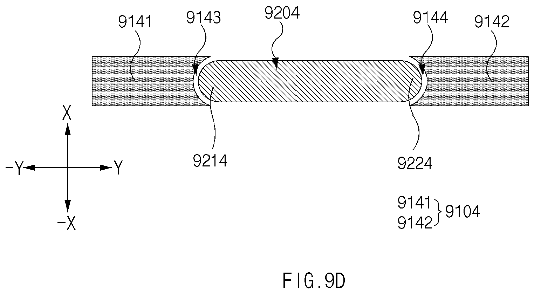

According to an embodiment, as illustrated in FIG. 9D, at least one first support structure 9204 may be disposed between a plurality of dustproof structures 9141 and 9142. For example, the at least one support structure 9204 may be disposed between the first dustproof structure 9141 and the second dustproof structure 9142. The first support structure 9204 may include a first protrusion 9214 that is formed on one side surface of the first support structure 9204 facing toward the first dustproof structure 9141 and that has a curved shape and a second protrusion 9224 that is formed on an opposite side surface of the first support structure 9204 facing toward the second dustproof structure 9142 and that has a curved shape. One end of the first dustproof structure 9141 that faces toward the first support structure 9204 may be formed in a "C" shape, and an opposite end of the first dustproof structure 9141 that faces toward the first support structure 9204 may be formed in an inverted "C" shape. The first dustproof structure 9141 may include a first dustproof recess 9143 corresponding to the first protrusion 9214. The first dustproof recess 9143 may be formed in an engraved shape in the -Y-axis direction. The second dustproof structure 9142 may include a second dustproof recess 9144 corresponding to the second protrusion 9224. The second dustproof recess 9144 may be formed in an engraved shape in the Y-axis direction. The first dustproof structure 9141 may be formed in a shape at least partially surrounding the first protrusion 9214 (or, a first edge) of the support structure 9204. The first dustproof structure 9141 may make contact with the first protrusion 9214 (or, the first edge) of the support structure 9204. Infiltration of external foreign matter between the first dustproof structure 9141 and the first support structure 9204 may be prevented or reduced. The second dustproof structure 9142 may be formed in a shape at least partially surrounding the second protrusion 9224 (or, a second edge) of the support structure 9204. The second dustproof structure 9142 may make contact with the second protrusion 9224 (or, the second edge) of the support structure 9204. Infiltration of external foreign matter between the second dustproof structure 9142 and the first support structure 9204 may be prevented or reduced.

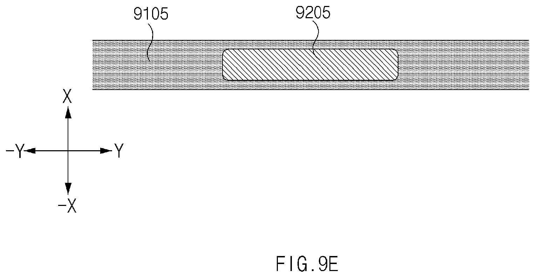

According to an embodiment, at least one first support structure 9205 may be disposed inside a first dustproof structure 9105 illustrated in FIG. 9E. The first dustproof structure 9105 may be formed to surround the at least one first support structure 9205. Infiltration of external foreign matter between the first dustproof structure 9105 and the first support structure 9205 may be prevented or reduced, and infiltration of foreign matter into a gap of the first support structure 9205 may be prevented or reduced.

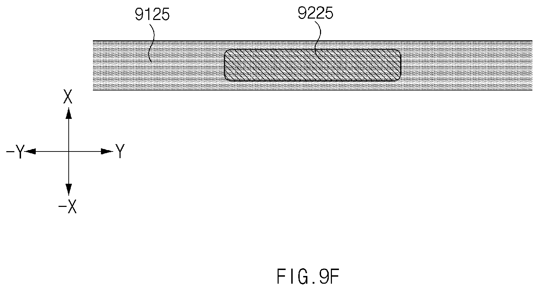

According to an embodiment, a first dustproof structure 9125 illustrated in FIG. 9F may be disposed to overlap a first support structure 9225. The first dustproof structure 9125 may be disposed on and under the first support structure 9225. Infiltration of external foreign matter between the first dustproof structure 9125 and the first support structure 9225 may be prevented or reduced, and infiltration of foreign matter into a gap of the first support structure 9225 may be prevented or reduced.

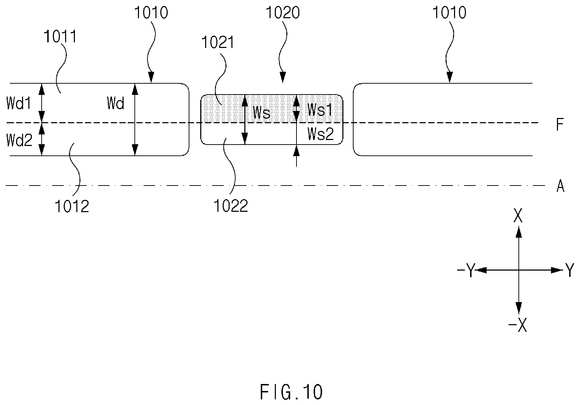

FIG. 10 is a view illustrating an example of the widths of a dustproof structure and a support structure of the electronic device according to an embodiment.

Referring to FIG. 10, the electronic device may include at least one dustproof structure 1010 and at least one support structure 1020. The width of the at least one dustproof structure 1010 may be greater than the width of the at least one support structure 1020. As the width of the dustproof structure 1010 is increased, the inflow path of external foreign matter may be lengthened, and thus infiltration of the external foreign matter into the electronic device may be prevented or reduced.

According to an embodiment, a virtual center line F on which the at least one dustproof structure 1010 is disposed may coincide with a virtual center line F on which the at least one support structure 1020 is disposed. The center line F of the at least one dustproof structure 1010 in the lengthwise direction may coincide with the center line F of the at least one support structure 1020 in the lengthwise direction. The center line F may be formed parallel to the folding axis A. The at least one dustproof structure 1010 may include a first dustproof area 1011 and a second dustproof area 1012 divided from each other with the virtual center line F therebetween. The width Wd1 of the first dustproof area 1011 located on one side with respect to the center line F may be equal or similar to the width Wd2 of the second dustproof area 1012 located on an opposite side with respect to the center line F. The at least one support structure 1020 may include a first support area 1021 and a second support area 1022 divided from each other with the virtual center line F therebetween. The width Ws1 of the first support area 1021 located on the one side with respect to the center line F may be equal or similar to the width Ws2 of the second support area 1022 located on the opposite side with respect to the center line F.

According to an embodiment, the width Wd1 of the first dustproof area 1011 located on the one side with respect to the center line F may be greater than the width Ws1 of the first support area 1021 located on the one side with respect to the center line F. The width Wd2 of the second dustproof area 1012 located on the opposite side with respect to the center line F may be greater than the width Ws2 of the second support area 1022 located on the opposite side with respect to the center line F.

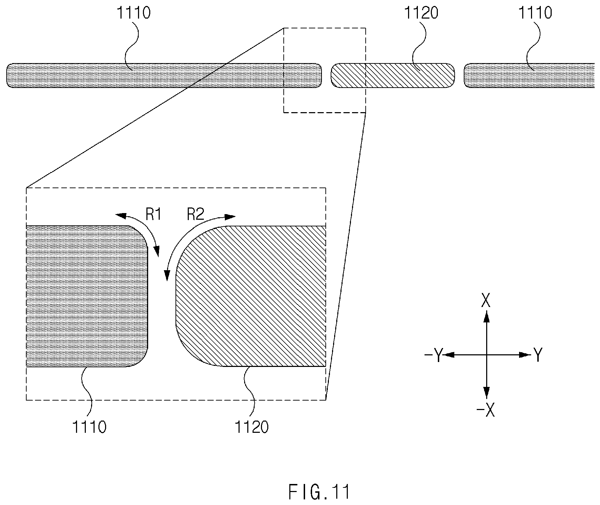

FIG. 11 illustrates a dustproof structure and a support structure according to an embodiment.

Referring to FIG. 11, at least one of the dustproof structure 1110 or the support structure 1120 according to an embodiment may be formed in a polygonal shape having curved corners. For example, the dustproof structure 1110 and the support structure 1120 may be formed in a quadrangular shape having rounded corners.

A base member (e.g., the base member 211 of FIG. 5) included in the dustproof structure 1110 may be formed in a quadrangular shape having rounded corners, a plurality of cilia (e.g., the fiber member 212 of FIG. 5) included in the dustproof structure 1110 may be formed in a quadrangular shape having rounded corners, or the base member and the plurality of cilia may be formed a quadrangular shape having rounded corners.

The curvature R2 of the corners of the support structure 1120 may be different from the curvature R1 of the corners of the dustproof structure 1110. The curvature R2 of the corners of the support structure 1120 may be greater than the curvature R1 of the corners of the dustproof structure 1110. The curvature R2 of the corners of the support structure 1120 formed of an injection material may be greater than the curvature R1 of the corners of the dustproof structure 1110.

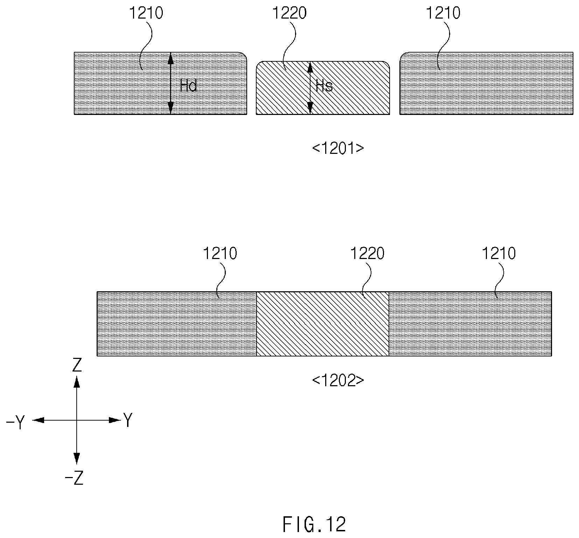

FIG. 12 is a view illustrating an example of a height relationship between a dustproof structure and a support structure according to an embodiment. In FIG. 12, drawing <1201> is a view illustrating an example of a state before the dustproof structure and the support structure are pressed by the hinge housing, and drawing <1202> is a view illustrating an example of a state in which the dustproof structure and the support structure are pressed by the hinge housing.

Referring to FIG. 12, the dustproof structure 1210 and the support structure 1220 according to an embodiment may have different heights before pressed by the hinge housing (e.g., the hinge housing 165 of FIGS. 2, 3, 6, and 7). The height Hs of the support structure 1220, which maintains a specified gap between the hinge housing and each of the first housing (e.g., the first housing 110 of FIGS. 1 to 4, 6, and 7) and the second housing (e.g., the second housing 120 of FIGS. 1 to 4, 6, and 7), may be lower than the height Hd of the dustproof structure 1210.

At least a portion of the dustproof structure 1210 according to an embodiment may be pressed by the hinge housing depending on at least one of an unfolded state or a folded state of the electronic device. The upper ends of at least some of the fiber members included in the dustproof structure 1210 may be pressed by the rear surface of the hinge housing 165. Accordingly, the fiber members may be curved in a certain direction.

At least one of the dustproof structure 1210 or the support structure 1220 according to an embodiment may be formed by an insert molding method. For example, the dustproof structure 1210 and the support structure 1220 may be integrally formed with each other by the insert molding method.

FIG. 13 is a view illustrating a support structure included in the electronic device according to an embodiment.

In FIG. 13, drawing <1301> is a perspective view of the support structure included in the electronic device, drawing <1302> is a plan view of the support structure included in the electronic device, drawing <1303> is a sectional view of the electronic device taken along line D1-D1' in drawing <1302>, and drawing <1304> is a sectional view of the electronic device taken along line D2-D2' in drawing <1302>.

Referring to FIG. 13, the electronic device according to an embodiment may include the first housing 110 (and/or, the second housing (e.g., the second housing 120 of FIGS. 1 to 4, 6, and 7)), one or more dustproof structures 1311 and 1312, and at least one support structure 1320.

The one or more dustproof structures 1311 and 1312 may be included in at least one first structure (e.g., the first structure 210 of FIGS. 3 to 7 and the first structure 810 of FIG. 8) (and/or, the third structure 220 of FIGS. 3 to 7).

The support structure 1320 may be included in at least one second structure (e.g., the second structure 310 of FIGS. 3 to 7 and the second structure 820 of FIG. 8) (and/or, the fourth structure 320 of FIGS. 3 to 7). The support structure 1320 included in the at least one second structure may be disposed adjacent to the first dustproof structure 1311 in the -Y-axis direction and may be disposed adjacent to the second dustproof structure 1312 in the +Y-axis direction. The support structure 1320 may be disposed between the first dustproof structure 1311 and the second dustproof structure 1312. For example, the first dustproof structure 1311 and the second dustproof structure 1312 may make contact with the support structure 1320 or may be spaced apart from the support structure 1320 by a distance smaller than the length of the support structure 1320.

At least a portion of the support structure 1320 may be formed in a reverse gradient or undercut structure. At least a portion of the side surface of the support structure 1320 may be formed in a reverse gradient or undercut structure. For example, at least a portion of the support structure 1320 may be formed such that the width is decreased and then increased from the seating surface 1135 (or, the inner surface) of the first housing 110 toward the hinge housing (e.g., the hinge housing 165 of FIGS. 1 to 7). The support structure 1320 may include a body area 1321, a neck area 1322, and a head area 1330.

The neck area 1322 may be disposed between the head area 1330 and the seating surface 1135 of the first housing 110. For example, the neck area 1322 may be disposed between the body area 1321 and the head area 1330 and may connect the body area 1321 and the head area 1330. The neck area 1322 may have a narrower width than the body area 1321 and the head area 1330.

The body area 1321 may extend from the neck area 1322 to the seating surface 1135 of the first housing 110. At least a portion of a side surface of the body area 1321 extending from the neck area 1322 having a narrow width may have an inclined surface.

The head area 1330 may face the outer surface of the hinge housing. The head area 1330 may be an area making contact with the rear surface of the hinge housing. The head area 1330 may protrude further toward the first dustproof structure 1311 and the second dustproof structure 1312 than the neck area 1322. The seating surface 1135 of the first housing 110 and at least a portion of the head area 1330 may each have a length parallel to the +Y-axis direction (and/or, the -Y-axis direction). The length of the at least a portion of the head area 1330 may be longer than the length of the seating surface 1135 of the first housing 110. The seating surface 1135 of the first housing 110 and the at least a portion of the head area 1330 may each have a width parallel to the +X-axis direction (and/or, the -X-axis direction). The width of the at least a portion of the head area 1330 may be smaller than or equal to the width of the seating surface 1135 of the first housing 110.

The head area 1330 may include a first head area 1331, a second head area 1332, and a third head area 1333. The first head area 1331 may extend toward the first dustproof structure 1311 from the third head area 1333 overlapping a receiving space 1350 (or, a first receiving space) in which the support structure 1320 is seated. The first head area 1331 may be seated on a third sidewall 1133 of the first housing 110. The first head area 1331 may extend toward the first dustproof structure 1311 from the third head area 1333 overlapping the receiving space 1350 in which the support structure 1320 is seated. The gap between the first head area 1331 that is seated on the third sidewall 1133 of the first housing 110 and that extends toward the first dustproof structure 1311 and the first dustproof structure 1311 may be minimized. Accordingly, infiltration of external foreign matter between the first head area 1331 of the support structure 1320 and the first dustproof structure 1311 may be blocked or reduced.

The second head area 1332 may be seated on a fourth sidewall 1134 of the first housing 110. The second head area 1332 may extend toward the second dustproof structure 1312 from the third head area 1333 overlapping the receiving space 1350 in which the support structure 1320 is seated. The gap between the second head area 1332 that is seated on the fourth sidewall 1134 of the first housing 110 and that extends toward the second dustproof structure 1312 and the second dustproof structure 1312 may be minimized. Accordingly, infiltration of external foreign matter between the second head area 1332 of the support structure 1320 and the second dustproof structure 1312 may be blocked or reduced.

The third head area 1333 may be disposed between the first head area 1331 and the second head area 1332 and may connect the first head area 1331 and the second head area 1332.

According to an embodiment, the inclined surface of the body area 1321 and the neck area 1322 of the support structure 1320 may face at least one of the first sidewall 1131, the second sidewall 1132, the third sidewall 1133, or the fourth sidewall 1134 of the first housing 110 to form a first cavity 1351. For example, the body area 1321 and the neck area 1322 may be disposed to face the third sidewall 1133 in the -Y-axis direction and face the fourth sidewall 1134 in the +Y-axis direction to form the first cavity 1351. For example, the body area 1321 and the neck area 1322 may be disposed to face the first sidewall 1131 in the -X-axis direction and face the second sidewall 1132 in the +X-axis direction to form the first cavity 1351. For example, the body area 1321 and the neck area 1322 may be disposed to face the first sidewall 1131, the second sidewall 1132, the third sidewall 1133, and the fourth sidewall 1134 of the first housing 110 to form the first cavity 1351. The first cavity 1351 may be filled with an adhesive member 1360. The support structure 1320 may be fixed to the first housing 110 through the adhesive member 1360.

The first housing 110 may include the plurality of sidewalls surrounding the receiving space 1350 in which the support structure 1320 is seated. The plurality of sidewalls may include the first sidewall 1131 (e.g., the first seating protrusion 611 of FIGS. 6 and 7) facing toward the folding axis, the second sidewall 1132 facing the first sidewall 1131, the third sidewall 1133 located between the first sidewall 1131 and the second sidewall 1132, and the fourth sidewall 1134 facing the third sidewall 1133. The first sidewall 1131 and the second sidewall 1132 may be formed long along the folding axis. The third sidewall 1133 and the fourth sidewall 1134 may be disposed perpendicular to the folding axis. The third sidewall 1133 may be disposed between the first dustproof structure 1311 and the support structure 1320. The fourth sidewall 1134 may be disposed between the second dustproof structure 1312 and the support structure 1320.

According to an embodiment, at least one of the first sidewall 1131 or the third sidewall 1133 may include a first interlocking protrusion 1141 protruding toward the support structure 1320. At least one of the second sidewall 1132 or the fourth sidewall 1134 may include a second interlocking protrusion 1142 protruding toward the support structure 1320. For example, the first sidewall 1131 may include the first interlocking protrusion 1141 protruding toward the support structure 1320. The second sidewall 1132 may include the second interlocking protrusion 1142 protruding toward the support structure 1320. The first interlocking protrusion 1141 and the second interlocking protrusion 1142 may be disposed to face each other with the support structure 1320 therebetween.

According to an embodiment, inner surfaces 1136 of the first sidewall 1131 and the second sidewall 1132 of the first housing 110 may face the inclined surface of the body area 1321 and the neck area 1322 of the support structure to form a second cavity 1352. The body area 1321 and the neck area 1322 may be disposed to face the first sidewall 1131 having the stepped inner surface 1136 in the -X-axis direction to form the second cavity 1352. The body area 1321 and the neck area 1322 may be disposed to face the second sidewall 1132 having the stepped inner surface 1136 in the +X-axis direction to form the second cavity 1352. The inner surfaces 1136 spaced further apart from the support structure 1320 relative to the inner surfaces of the first interlocking protrusion 1141 and the second interlocking protrusion 1142 may face the inclined surface of the body area 1321 and the neck area 1322, and thus the second cavity 1352 may form a relatively large space. The second cavity 1352 in communication with the first cavity 1351 may be filled with the adhesive member 1360. The support structure 1320 may be fixed to the first housing 110 through the adhesive member 1360.

According to an embodiment, the adhesive member 1360 may include a first protruding area 1361, a second protruding area 1362, a third protruding area 1363, and a fourth protruding area 1364.

The first protruding area 1361 of the adhesive member 1360 may protrude in the direction opposite to that of the first interlocking protrusion 1141 of the first housing 110. The first interlocking protrusion 1141 may protrude in the X-axis direction (or, toward the head area 1330 of the support structure 1320), and the first protruding area 1361 of the adhesive member 1360 may protrude further in the -X-axis direction than the support structure 1320 (e.g., the third head area 1333 of the support structure). The first protruding area 1361 of the adhesive member 1360 may be formed to be engaged with the first interlocking protrusion 1141. The first protruding area 1361 of the adhesive member 1360 may be engaged with the first interlocking protrusion 1141 to face the first interlocking protrusion 1141 in the Z-axis direction. Accordingly, separation of the support structure 1320, which adheres to the first protruding area 1361 of the adhesive member 1360, in the Z-axis direction (e.g., the direction toward the display 130 of FIGS. 1, 3, 6, and 7) may be prevented or reduced.

The second protruding area 1362 of the adhesive member 1360 may protrude in the direction opposite to that of the second interlocking protrusion 1142 of the first housing 110. The second protruding area 1362 of the adhesive member 1360 may protrude further in the X-axis direction than the support structure 1320 (e.g., the third head area 1333 of the support structure), and the second interlocking protrusion 1142 may protrude in the - X-axis direction (or, toward the head area 1330 of the support structure 1320). The second protruding area 1362 of the adhesive member 1360 may be formed to be engaged with the second interlocking protrusion 1142. The second protruding area 1362 of the adhesive member 1360 may be engaged with the second interlocking protrusion 1142 to face the second interlocking protrusion 1142 in the Z-axis direction. Accordingly, separation of the support structure 1320, which adheres to the second protruding area 1362 of the adhesive member 1360, in the Z-axis direction (e.g., the direction toward the display 130 of FIGS. 1, 3, 6, and 7) may be prevented or reduced.

The third protruding area 1361 of the adhesive member 1360 may protrude in the direction opposite to that of the first head area 1331 of the support structure 1320. The third protruding area 1363 of the adhesive member 1360 may protrude from the third sidewall 1133 in the Y-axis direction (or, toward the neck area 1322 of the support structure), and the first head area 1331 of the support structure 1320 may protrude in the -Y-axis direction. The third protruding area 1363 of the adhesive member 1360 may be formed to be engaged with the first head area 1331 of the support structure 1320. The third protruding area 1363 of the adhesive member 1360 may be engaged with the first head area 1331 of the support structure 1320 to face the first head area 1331 of the support structure 1320 in the Z-axis direction. Accordingly, separation of the support structure 1320, which adheres to the third protruding area 1363 of the adhesive member 1360, in the Z-axis direction (e.g., the direction toward the display 130 of FIGS. 1, 3, 6, and 7) may be prevented or reduced.

The fourth protruding area 1364 of the adhesive member 1360 may protrude in the direction opposite to that of the second head area 1332 of the support structure 1320. The fourth protruding area 1364 of the adhesive member 1360 may protrude from the fourth sidewall 1134 in the -Y-axis direction (or, toward the neck area 1332 of the support structure), and the second head area 1332 of the support structure 1320 may protrude in the Y-axis direction. The fourth protruding area 1364 of the adhesive member 1360 may be formed to be engaged with the second head area 1332 of the support structure 1320. The fourth protruding area 1364 of the adhesive member 1360 may be engaged with the second head area 1332 of the support structure 1320 to face the second head area 1332 of the support structure 1320 in the Z-axis direction. Accordingly, separation of the support structure 1320, which adheres to the fourth protruding area 1364 of the adhesive member 1360, in the Z-axis direction (e.g., the direction toward the display 130 of FIGS. 1, 3, 6, and 7) may be prevented or reduced.

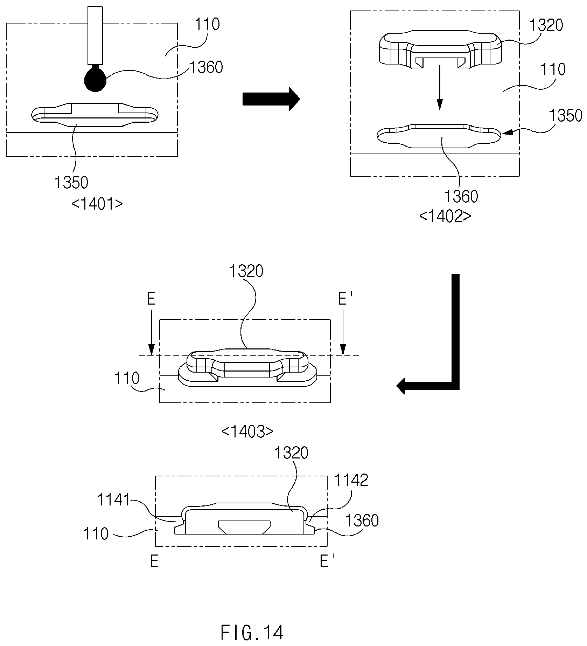

FIG. 14 is a view illustrating an example of an assembly process between the first housing and the support structure of the electronic device according to an embodiment.

Referring to FIG. 14, in operation 1401, the first housing 110 (and/or, the second housing 120) including the receiving space 1350 may be provided. At least recess may be formed in the first housing 110, and the receiving space 1350 may be formed in the form of a recess. The adhesive member 1360 may be applied to the receiving space 1350.

In operation 1402, the support structure 1320 may be assembled (or, inserted) into the receiving space 1350 of the first housing 110 in the vertical direction (or, in a direction parallel to the depth direction of the receiving space).

In operation 1403, the adhesive member 1360 may be cured after the support structure 1320 is assembled, and the support structure 1320 may be fixed to the first housing 110 through the adhesive member 1360. A portion of the adhesive member 1360 attached to the support structure 1320 may be coupled to be engaged with the first interlocking protrusion 1141 and the second interlocking protrusion 1142 of the first housing 110.

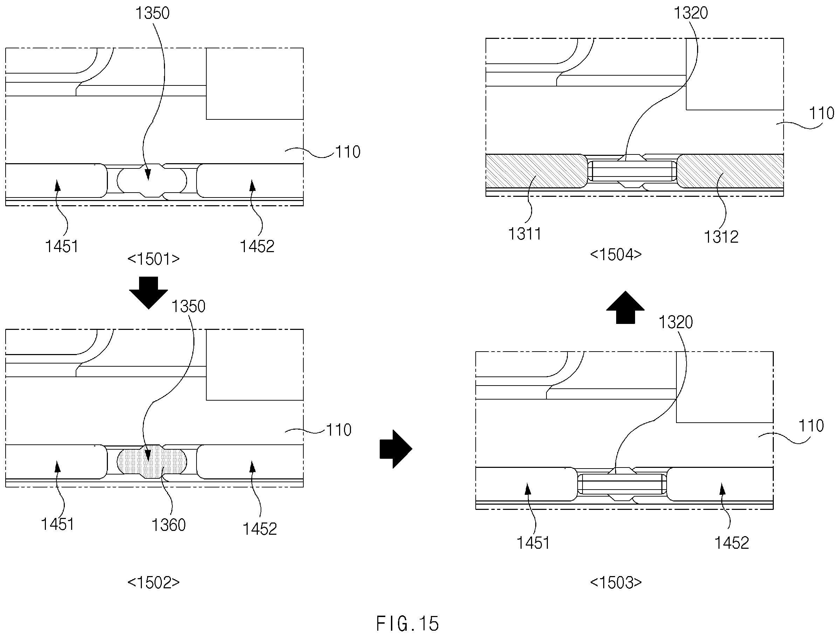

FIG. 15 is a view illustrating an example of a manufacturing method of the electronic device according to an embodiment.

Referring to FIG. 15, in operation 1501, the first housing 110 (and/or, the second housing 120) that includes the receiving space 1350 (or, the first receiving space), a second receiving space 1451, and a third receiving space 1452 may be provided. A plurality of recesses may be formed in the first housing 110, and the receiving space 1350, the second receiving space 1451, and the third receiving space 1452 may be formed in the form of a recess. The receiving space 1350, the second receiving space 1451, and the third receiving space 1452 may be arranged in a line.

In operation 1502, the adhesive member 1360 may be applied to at least one of the receiving space 1350, the second receiving space 1451, or the third receiving space 1452. For example, the adhesive member 1360 may be applied to at least a portion of the third receiving space 1452 in which the support structure 1320 is to be seated.

In operation 1503, the support structure 1320 may be assembled (or, inserted) into the receiving space of the first housing 110 in the vertical direction (or, in a direction parallel to the depth direction of the receiving space). The adhesive member 1360 may be cured after the support structure 1320 is assembled, and the support structure 1320 may be fixed to the first housing 110 through the adhesive member 1360.

In operation 1504, the first dustproof structure 1311 may be assembled to the second receiving space 1451, and the second dustproof structure 1312 may be assembled to the third receiving space 1452. The first dustproof structure 1311 assembled to the second receiving space 1451 and the second dustproof structure 1312 assembled to the third receiving space 1452 may be attached to the first housing 110. The first dustproof structure 1311, the support structure 1320, and the second dustproof structure 1312 may be arranged in a line.

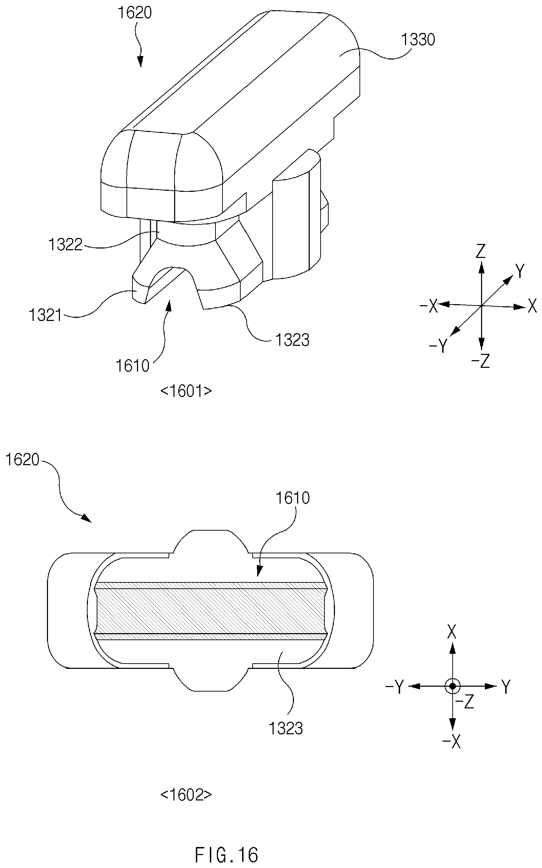

FIG. 16 illustrates views of a support structure according to an embodiment. In FIG. 16, drawing <1601> is a perspective view illustrating the support structure according to an embodiment, and drawing <1602> is a rear view of the support structure according to an embodiment.

Referring to FIG. 16, the support structure 1620 (e.g., the support structure 1320 of FIGS. 13 to 15) may include a head area 1330, a neck area 1322, and a body area 1321.

The body area 1321 may include a passage 1610 formed in the lengthwise direction of the body area 1321. The passage 1610 may be formed in an engraved shape toward the head area 1330 from the bottom surface 1323 of the body area 1321 that faces the seating surface (e.g., the seating surface 1135 of FIG. 13) of the first housing (e.g., the first housing 110 in at least one of FIGS. 1 to 15).

The passage 1610 may be formed through the body area 1321 from one side surface of the body area 1321 that faces in the -Y-axis direction to an opposite side surface of the body area 1321 that faces in the Y-axis direction. The passage 1610 may be used as a passage through which an adhesive liquid of an adhesive member (e.g., the adhesive member 1360 in at least one of FIGS. 13 to 15) applied to the receiving space of the first housing moves. The liquid adhesive member 1360 may move through the passage 1610 after the support structure is assembled to the receiving space, and thus an overflow of the liquid adhesive member 1360 from the receiving space may be prevented or reduced.

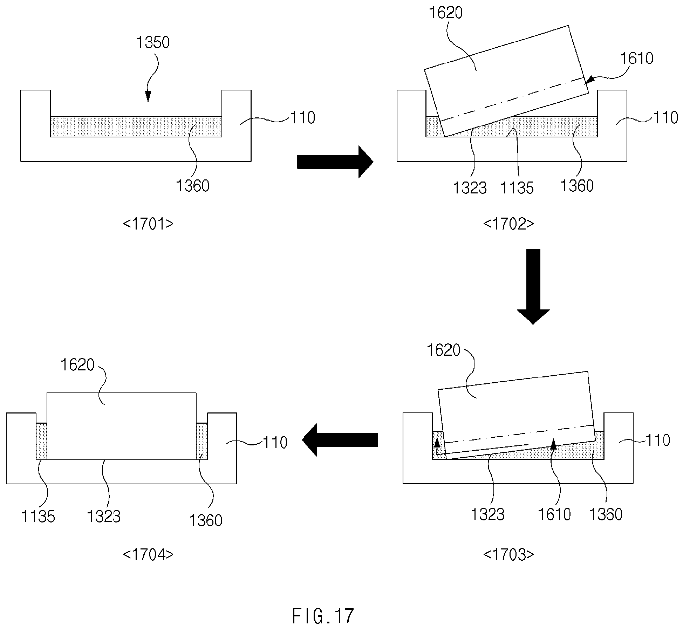

FIG. 17 is a view illustrating an assembly process of the support structure including the passage and the first housing according to an embodiment.

Referring to FIG. 17, in operation 1701, the first housing 110 (and/or, the second housing 120) including the receiving space 1350 may be provided. The liquid adhesive member 1360 may be applied to the first housing 110.

In operation 1702, at least a portion of the support structure 1620 may be accommodated in the receiving space 1350 of the first housing 110. The support structure 1620 may include the passage 1610 parallel to the seating surface 1135 of the first housing 110. According to an embodiment, to prevent or reduce an overflow of the liquid adhesive member 1360 that occurs when the support structure 1620 is obliquely fastened without being vertically fastened to the seating surface 1135 of the first housing 110, the support structure 1620 may include the passage 1610.

In operation 1703, when the support structure 1620 is obliquely seated without being vertically fastened to the seating surface 1135 of the first housing 110, the passage 1610 may also be disposed to be inclined with respect to the seating surface 1135. The liquid adhesive member 1360 may move to an opposite end of the passage 1610 through one end of the passage 1610. The liquid adhesive member 1360 may move to the opposite end of the passage 1610 disposed close to the seating surface 1135 through the one end of the passage 1610 disposed far away from the seating surface 1135. Since the liquid adhesive member 1360 is dispersed from the area where the liquid adhesive member 1360 is concentrated to the opposite area through the passage 1610, bias of the liquid adhesive member 1360 to one side or an opposite side may be prevented or reduced. Accordingly, an overflow of the liquid adhesive member 1360 from the receiving space 1350 may be prevented or reduced.

In operation 1704, the liquid adhesive member 1360 may be pressed by the weight of the support structure 1620 and may move between the support structure 1620 and the first housing 110. The liquid adhesive member 1360 and the support structure 1620 may be formed in the receiving space 1350 without being biased. The liquid adhesive member 1360 may be formed into a solid adhesive member 1360 through a curing process. The support structure 1620 may be fixed to the first housing 110 through the solid adhesive member 1360 without being biased (or, inclined). The bottom surface 1323 of the support structure 1620 may be disposed parallel to the seating surface 1135 of the first housing 110. According to an embodiment, at least a portion of the bottom surface 1323 of the support structure 1620 may make direct contact with the seating surface 1135 of the first housing 110. According to an embodiment, at least a portion of the bottom surface 1323 of the support structure 1620 may be fixed to the seating surface 1135 of the first housing 110 through the solid adhesive member 1360.

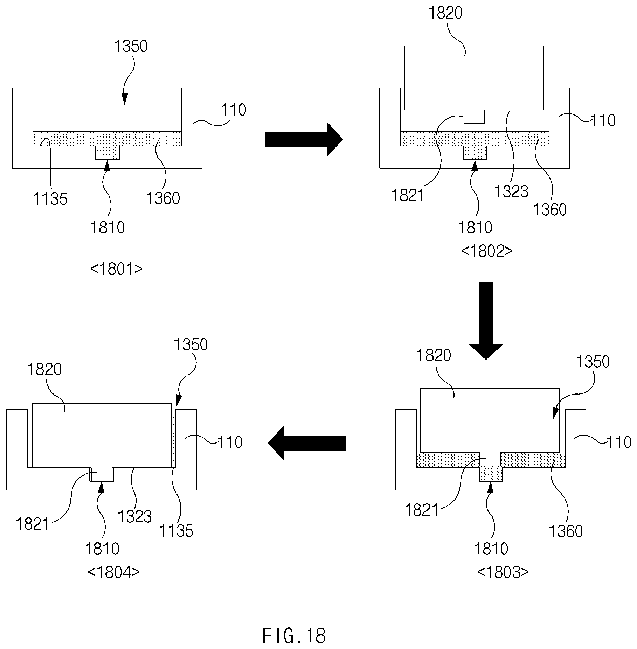

FIG. 18 is a view illustrating an assembly process of a support structure and the first housing including a guide recess according to an embodiment.

Referring to FIG. 18, in operation 1801, the first housing 110 (and/or, the second housing 120) that includes the guide recess 1810 and the receiving space 1350 may be provided. The guide recess 1810 and the receiving space 1350 may have depths in the same direction. The guide recess 1810 and the receiving space 1350 may be formed in an engraved shape in the same direction. The guide recess 1810 may be formed in an engraved shape in the same direction as that of the receiving space 1350 from the seating surface 1135 of the first housing 110. The guide recess 1810 may be connected with the receiving space 1350. The guide recess 1810 may be disposed at a position deeper than the receiving space 1350. The liquid adhesive member 1360 may be applied to the first housing 110. The liquid adhesive member 1360 may fill the guide recess 1810 and a portion of the receiving space 1350.

In operation 1802, at least a portion of the support structure 1820 may be accommodated in the receiving space 1350 of the first housing 110. The support structure 1820 may include a guide protrusion 1821 corresponding to the guide recess 1810. The guide protrusion 1821 may protrude toward the guide recess 1810 from the bottom surface 1323 of the support structure 1820.

In operation 1803, the guide protrusion 1821 of the support structure 1820 may be aligned with the guide recess 1810 of the first housing 110. The guide protrusion 1821 of the support structure 1820 may be assembled to the guide recess 1810 of the first housing 110 in a direction perpendicular to the seating surface 1135 of the first housing 110. According to an embodiment, the guide protrusion 1821 of the support structure 1820 may be assembled to the guide recess 1810 of the first housing 110 before the liquid adhesive member 1360 is pressed by the support structure 1820. The support structure 1820 may be vertically assembled in the direction perpendicular to the seating surface 1135 of the first housing 110. Accordingly, obliquely assembling the support structure 1820 with respect to the seating surface 1135 of the first housing 110 may be prevented or reduced.

In operation 1804, the liquid adhesive member 1360 may be pressed by the weight of the support structure 1820 and may move between the support structure 1820 and the first housing 110. The liquid adhesive member 1360 and the support structure 1820 may be formed in the receiving space 1350 without being biased. The liquid adhesive member 1360 may be formed into a solid adhesive member 1360 through a curing process. The support structure 1820 may be fixed to the first housing 110 through the solid adhesive member 1360 without being biased (or, inclined). The bottom surface 1323 of the support structure 1820 may be disposed parallel to the seating surface 1135 of the first housing 110. According to an embodiment, at least a portion of the bottom surface 1323 of the support structure 1820 may make direct contact with the seating surface 1135 of the first housing 110. According to an embodiment, at least a portion of the bottom surface 1323 of the support structure 1820 may be fixed to the seating surface 1135 of the first housing 110 through the solid adhesive member 1360.

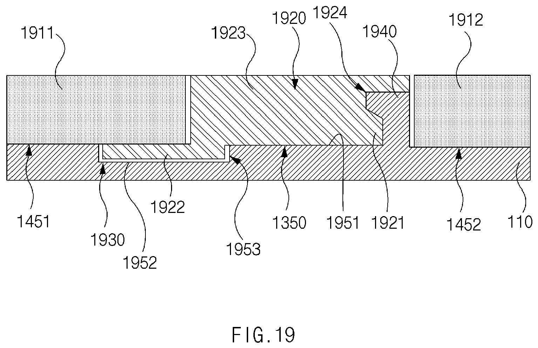

FIG. 19 is a view illustrating an electronic device according to an embodiment that includes a support structure assembled to a housing in a sliding manner.

Referring to FIG. 19, the electronic device according to an embodiment may include a first housing 110 (or, a second housing), at least one support structure 1920, and at least one dustproof structure 1911 and 1912. Hereinafter, it will be exemplified that the at least one dustproof structure 1911 and 1912 includes the first dustproof structure 1911 and the second dustproof structure 1912.

The first housing 110 may include a first receiving space 1350 in which the support structure 1920 is accommodated, a second receiving space 1451 in which the first dustproof structure 1911 is accommodated, and a third receiving space 1452 in which the second dustproof structure 1912 is accommodated. The first receiving space 1350 and the second receiving space 1451 may be connected with each other. The first receiving space 1350 and the third receiving space 1452 may be divided from each other by a sidewall on which a first coupling protrusion 1940 of the first housing 110 (e.g., the interlocking protrusions 1141 and 1142 of FIG. 13) is formed. The first coupling protrusion 1940 may protrude toward at least one of the support structure 1920 or the second dustproof structure 1912. For example, the first coupling protrusion 1940 may protrude toward the support structure 1920 from the sidewall of the first housing 110.

The first housing 110 may include a fourth receiving space 1930. The fourth receiving space 1930 may be formed between the first receiving space 1350 and the second receiving space 1451. The fourth receiving space 1930 may be connected with the first receiving space 1350 and the second receiving space 1451. A second seating surface 1952 formed by the fourth receiving space 1930 may form a different plane from a first seating surface 1951 formed by the first receiving space 1350 (e.g., the seating surface 1135 of FIG. 13). A step 1953 may be formed between the second seating surface 1952 and the first seating surface 1951. The step 1953 may limit movement of the support structure 1920 when the support structure 1920 slides.

The first dustproof structure 1911 may be located on one side of the support structure 1920, and the second dustproof structure 1912 may be located on an opposite side of the support structure 1920. One of the first dustproof structure 1911 and the second dustproof structure 1912 may be disposed on a portion of the support structure 1920 assembled to the first housing 110 in a sliding manner. For example, at least a portion of the first dustproof structure 1911 may be disposed on a flange 1922 of the support structure 1920 assembled to the first housing 110 in a sliding manner. The first dustproof structure 1911 may directly face the support structure 1920. The first dustproof structure 1911 may be brought into close contact with the support structure 1920 without a separate spacing member, and thus the first dustproof structure 1911 may prevent or reduce infiltration of external foreign matter between the first dustproof structure 1911 and the support structure 1920. The sidewall on which the first coupling protrusion 1940 of the first housing 110 is formed may be disposed between the second dustproof structure 1912 and the support structure 1920.

The support structure 1920 may slide while making contact with at least a portion of the outer surface of the first housing 110 (and/or, the second housing 120). The support structure 1920 may be assembled to the first receiving space of the first housing by sliding from the second receiving space 1451 to the first receiving space 1350. The support structure 1920 may include a body area 1923, a second coupling protrusion 1921, the flange 1922, and a recess 1924.

The second coupling protrusion 1921 may protrude toward at least one of the first dustproof structure 1911 or the second dustproof structure 1912. The second coupling protrusion 1921 may protrude in the direction opposite to that of the first coupling protrusion 1940 of the first housing 110. For example, the second coupling protrusion 1921 may protrude toward the second dustproof structure 1912 from the body area 1923. The second coupling protrusion 1921 may protrude in a direction parallel to the sliding direction of the support structure 1920. The second coupling protrusion 1921 may be formed to be engaged with the first coupling protrusion 1940 of the first housing 110. The second coupling protrusion 1921 of the support structure 1920 may be engaged with the first coupling protrusion 1940 of the first housing 110 such that the second coupling protrusion 1921 of the support structure 1920 faces the first coupling protrusion 1940 of the first housing 110 in the thickness direction of the support structure 1920. Accordingly, separation of the support structure 1920, which is coupled to the first coupling protrusion 1940 of the first housing 110, in the thickness direction of the support structure 1920 (e.g., the direction toward the display 130 of FIGS. 1, 3, 6, and 7) may be prevented or reduced.

The flange 1922 may protrude in the direction opposite to that of the second coupling protrusion 1921. For example, the flange 1922 may protrude toward the first dustproof structure 1911 from the body area 1923. The flange 1922 may be accommodated in the fourth receiving space 1930 of the first housing 110. When the support structure 1920 slides, the flange 1922 may be stopped by the step 1953, and thus the sliding of the support structure 1920 may be restricted.

The recess 1924 may be disposed on a side surface of the support structure 1920. The recess 1924 may be formed in a concave shape corresponding to the first coupling protrusion 1940 of the first housing 110. The recess 1924 may be coupled to at least a portion of the first coupling protrusion 1940 in a sliding manner.

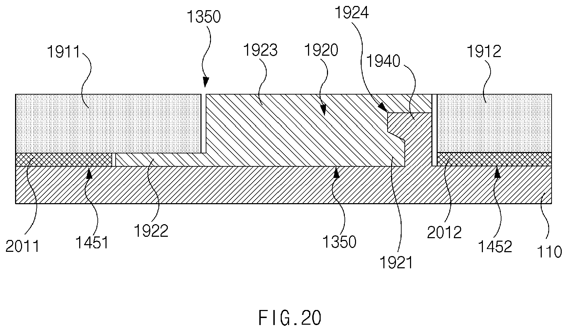

FIG. 20 is a view illustrating an electronic device according to an embodiment that includes a support structure assembled to a housing in a sliding manner.

Referring to FIG. 20, the electronic device according to an embodiment may include a first housing 110 (or, a second housing), at least one support structure 1920, and at least one dustproof structure 1911 and 1912. The electronic device illustrated in FIG. 20 may have the same configuration as the electronic device illustrated in FIG. 19, except that the electronic device illustrated in FIG. 20 includes a plurality of plates 2011 and 2012 instead of a flange. Accordingly, the previous descriptions may be applied to the same components or operations.

According to an embodiment, the plurality of plates 2011 and 2012 may include the first plate 2011 and the second plate 2012 spaced apart from each other with the support structure 1920 therebetween.

The first plate 2011 may be disposed between the first dustproof structure 1911 and the first housing 110. A portion of the first dustproof structure 1911 may be disposed on the flange 1922 of the support structure 1920. The first plate 2011 may be disposed between at least a portion of the rest of the first dustproof structure 1911 and the first housing 110. The first plate 2011 may have a thickness corresponding to a difference between the maximum thickness of the support structure 1920 and the thickness of the first dustproof structure 1911. For example, the first plate 2011 may have a thickness corresponding to the thickness of the flange 1922 disposed on the first housing 110.

The second plate 2012 may be disposed between the second dustproof structure 1912 and the first housing 110. At least a portion of the second dustproof structure 1912 may be disposed on the second plate 2012. The second plate 2012 may have a thickness corresponding to a difference between the maximum thickness of the support structure 1920 and the thickness of the second dustproof structure 1912. The second plate 2012 may have a thickness equal to or different from the thickness of the first plate 2011.

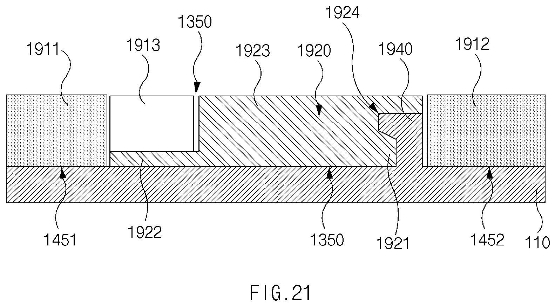

FIG. 21 is a view illustrating an electronic device according to an embodiment that includes a support structure assembled to a housing in a sliding manner.

Referring to FIG. 21, the electronic device according to an embodiment may include a first housing 110 (or, a second housing), at least one support structure 1920, and at least one dustproof structure 1911 and 1912. The electronic device illustrated in FIG. 21 may have substantially the same configuration as the electronic device illustrated in FIG. 19, except that the electronic device illustrated in FIG. 21 further includes a third dustproof structure 1913 (or, an auxiliary dustproof structure). Accordingly, the previous descriptions may be applied to the same components or operations.

At least a portion of the third dustproof structure 1913 may be disposed on the flange 1922 of the support structure 1920. The third dustproof structure 1913 may be disposed between the first dustproof structure 1911 and the body area 1923 of the support structure 1920. The third dustproof structure 1913 may have a different thickness from at least one of the first dustproof structure 1911 or the second dustproof structure 1912. The third dustproof structure 1913 may have a thickness smaller than that of at least one of the first dustproof structure 1911 or the second dustproof structure 1912. The third dustproof structure 1913 may have a thickness corresponding to a difference between the thickness of the body area 1923 of the support structure 1920 and the thickness of the flange 1922. The third dustproof structure 1913 may be disposed between the first dustproof structure 1911 and the support structure 1920 and may be brought into close contact with the first dustproof structure 1911 and the support structure 1920. Infiltration of external foreign matter between the first dustproof structure 1911 and the support structure 1920 may be prevented or reduced.

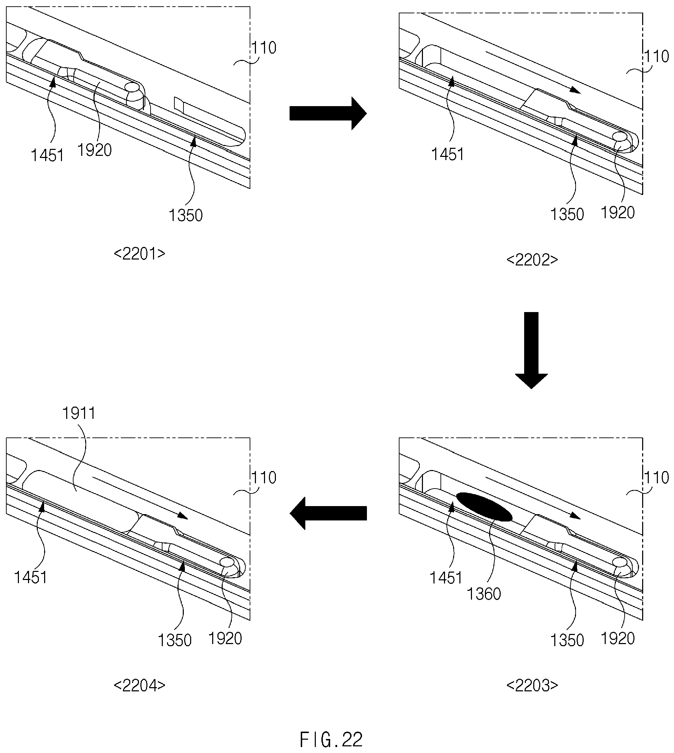

FIG. 22 is a view illustrating an example of a sliding operation of a support structure assembled with a first housing of an electronic device according to an embodiment.

Referring to FIG. 22, in operation 2201, a first housing 110 (or, a second housing) including a first receiving space 1350 (e.g., the first receiving space 1350 of FIGS. 19 to 21) and a second receiving space 1451 (e.g., the second receiving space 1451 of FIGS. 19 to 21) may be provided. A support structure 1920 may be seated in the second receiving space 1451 of the first housing 110.

In operation 2202, the first support structure 1920 may slide from the second receiving space 1451 to the first receiving space 1350.

In operation 2203, a liquid adhesive member 1360 may be applied to the second receiving space 1451. The liquid adhesive member 1360 may be spread from the second receiving space 1451 to the first receiving space 1350, and thus the support structure 1920 may be fixed to the first housing 110 through the adhesive member 1360.

In operation 2204, a first dustproof structure 1911 may be assembled to the second receiving space 1451. Since the second receiving space 1451 and the first receiving space 1350 are connected without a separate spacing member, the first dustproof structure 1911 may be assembled to the second receiving space 1451 so as to be brought into close contact with the support structure 1920 accommodated in the first receiving space 1350.

Meanwhile, the dustproof structures and the support structures described above are not limited to the embodiments described with reference to the drawings, and the dustproof structures and the support structures described with reference to the drawings may be applied in combination with each other. For example, each of the support structures described with reference to FIGS. 3, 4, 6 to 13, 16, and 19 to 21 may be provided in plural in an electronic device according to an embodiment, or a combination thereof may be provided in an electronic device according to an embodiment. Furthermore, each of the dustproof structures described with reference to FIGS. 3 to 13, 16, and 19 to 21 may be provided in plural in an electronic device according to an embodiment, or a combination thereof may be provided in an electronic device according to an embodiment.

In addition, at least one of the assembly methods described with reference to FIGS. 14, 15, 17, 18, and 22 may be applied to the support structures described with reference to FIGS. 3, 4, 6 to 13, 16, and 19 to 21, and at least one of the assembly methods described with reference to FIGS. 14, 15, 17, 18, and 22 may be applied to the dustproof structures described with reference to FIGS. 3 to 13, 16, and 19 to 21.

A foldable electronic device according to at least one embodiment may comprise a first housing, a second housing and a hinge coupled to the first housing and the second housing. The foldable electronic device may further comprise a first member disposed between the first housing and the hinge, and a first support structure disposed between the first housing and the hinge, wherein the first member and the first support structure are adjacent to one another. The first member makes contact with both the hinge housing and the first housing when the foldable electronic device is in a folded or unfolded state.

The hinge may comprise a hinge structure coupled to the first housing and the second housing, and a hinge housing wherein the hinge structure is disposed.

It may be that the first member makes contact with both the hinge housing and the first housing when the foldable electronic device is in a folded state and when the foldable electronic device is in an unfolded state. It may be that the first member makes contact with both the hinge housing and the first housing when the foldable electronic device is in a state between a folded state and an unfolded state.

The first member and the first support structure may make contact with one another. The first member and the first support structure may be arranged such that when deformed during use the first member and the first support structure will make contact with one another. The first member and the first support structure may be spaced apart from each other by a distance smaller than a length of the first support structure, the length of the first support structure being measured in a direction parallel to a folding axis of the hinge. The first member and the first support structure may be spaced apart from each other by a distance smaller than a width of the first support structure, the width of the first support structure being measured in a direction perpendicular to the folding axis of the hinge. The first member and the first support structure may be spaced apart from each other by a distance smaller than the smallest distance between two exterior points of the first support structure, where that distance passes through the center of mass of the support structure.

The first member may be arranged to prevent the passage of at least some dust, particulates, contaminants or foreign matter between the first housing and the hinge. The first member may be a dustproof structure.

The foldable electronic device may comprise a second member comprise between the first housing and the hinge, such that the first support structure is located between the first member and the second member. The second member and the first support structure may be adjacent. The second member may make contact with both the hinge housing and the first housing when the foldable electronic device is in a folded or unfolded state.

It may be that the second member makes contact with both the hinge housing and the first housing when the foldable electronic device is in a folded state and when the foldable electronic device is in an unfolded state. It may be that the second member makes contact with both the hinge housing and the first housing when the foldable electronic device is in a state between a folded state and an unfolded state.

The second member and the first support structure may make contact with one another. The second member and the first support structure may be arranged such that when deformed during use the second member and the first support structure will make contact with one another. The second member and the first support structure may be spaced apart from each other by a distance smaller than a length of the first support structure, the length of the first support structure being measured in a direction parallel to a folding axis of the hinge. The second member and the first support structure may be spaced apart from each other by a distance smaller than a width of the first support structure, the width of the first support structure being measured in a direction perpendicular to the folding axis of the hinge. The second member and the first support structure may be spaced apart from each other by a distance smaller than the smallest distance between two exterior points of the first support structure, where that distance passes through the center of mass of the support structure.

The second member may be arranged to prevent the passage of at least some dust, particulates, contaminants or foreign matter between the first housing and the hinge. The second member may be a dustproof structure.

The support structure may be configured such that, if the first housing is urged towards to hinge the support structure resists a motion of the first housing towards the hinge. The support structure may be configured such that, if the first housing is urged towards to hinge when the foldable electronic device is in a folded state, the support structure resists a motion of the first housing towards the hinge. The support structure may be configured such that, if the first housing is urged towards to hinge when the foldable electronic device is in an unfolded state, the support structure resists a motion of the first housing towards the hinge. The support structure may be configured such that, if the first housing is urged towards to hinge when the foldable electronic device is in a state between a folded state and an unfolded state, the support structure resists a motion of the first housing towards the hinge. It may be that the force provided by the support structure in resistance to the urging is greater than a force provided by the first member in reaction to the same urging. It may be that the force provided by the support structure in resistance to the urging is greater than a force provided by the second member in reaction to the same urging.

A foldable electronic device (100) according to at least one embodiment may include a first housing (110), a second housing (120), a hinge structure (164a) coupled to the first housing (110) and the second housing (120), a hinge housing (165) where the hinge structure (164a) is disposed, a first dustproof structure (811) and a second dustproof structure

(812) disposed between the first housing (110) and the hinge housing (165), and a first support structure (821) disposed between the first dustproof structure (811) and the second dustproof structure (812) in a lengthwise direction of the hinge housing (165).

According to an embodiment, the first dustproof structure (811) and the first support structure (821) may make contact with each other or may be spaced apart from each other by a distance smaller than a length of the first support structure (821).

According to an embodiment, the second dustproof structure (812) and the first support structure (821) may make contact with each other or may be spaced apart from each other by a distance smaller than the length of the first support structure (821).

According to an embodiment, at least a portion of the first dustproof structure (811) and at least a portion of the second dustproof structure (812) may be brought into contact with a first portion (621) of an outer surface of the hinge housing (165) in a folded or unfolded state of the foldable electronic device (100).

According to an embodiment, at least a portion of the first support structure (1320) may be formed such that a width is decreased and then increased from an inner surface (1135) of the first housing (110) toward the hinge housing (165).

A length of the first support structure may be measured along an axis that is parallel to the folding axis of the hinge structure. A height of the first support structure may be measured along an axis between a point where the first support structure contacts the first housing, in use, and a point where the first support structure contacts the hinge housing, in use. The width of the first support structure may be measured along any axis which is perpendicular to both the length axis and the height axis. At least a portion of the first support structure may be formed such that its width decreases and then increases between an inner surface of the first housing and the hinge housing. At least a portion of the first support structure may be formed such that its width has a minimum value at a point between the first housing and the hinge housing, the width of the portion of the first support structure at the minimum being less that the width of the portion of the support structure at points adjacent to the first housing and the hinge housing.

According to an embodiment, at least a portion of the first support structure (1320) may include a head area (1330) that faces the outer surface of the hinge housing (165) and a neck area (1322) disposed between the head area (1330) and an inner surface (1135) of the first housing (110).

According to an embodiment, the head area (1330) may protrude further toward at least one of the first dustproof structure (1311) or the second dustproof structure (1312) than the neck area (1322).

According to an embodiment, a portion of the first housing (110) may include a receiving space (1350) in which at least a portion of the first support structure (1320) is accommodated.

According to an embodiment, a portion of the first support structure (1320) may be spaced apart from an inner surface of the receiving space (1350) to form at least one cavity (1351).

According to an embodiment, an adhesive member (1360) may be formed in the at least one cavity (1351). According to an embodiment, the inner surface of the receiving space (1350) may include a stepped structure (1136).

According to an embodiment, a portion of the stepped structure may be spaced apart from a portion of a first support structure (1320) to form at least one cavity (1352), and an adhesive member (1360) may be formed in the at least one cavity (1352).

According to an embodiment, at least a portion of the first support structure (310) may make contact with a second portion (622) of the outer surface of the hinge housing (165) different from the first portion (621) when the foldable electronic device (100) is in a closed state.

According to an embodiment, the foldable electronic device (100) may further include a third dustproof structure (813) disposed in line with the second dustproof structure (812) in the lengthwise direction of the hinge housing (165) and a second support structure (822) disposed between the second dustproof structure (812) and the third dustproof structure (813).

According to an embodiment, the first support structure (821) may have a different length from the second support structure (822).

According to an embodiment, at least one of the first dustproof structure (811) or the second dustproof structure (812) may include a recess (9111, 9121, 9122).

According to an embodiment, at least a portion of the first support structure (9201, 9202, 9211, 9212) may be disposed in the recess (9111, 9121, 9122).

According to an embodiment, at least one (9141) of the first dustproof structure (9141) or the second dustproof structure (9142) may include at least one recess (9143, 9144) formed at one end.

According to an embodiment, the first support structure (9204) may have at least one protrusion (9124, 9224) corresponding to the at least one recess (9143, 9144).

According to an embodiment, the first dustproof structure (9105) may at least partially surround a first edge of the first support structure (9205), and the second dustproof structure may at least partially surround a second edge of the first support structure.

According to an embodiment, the first dustproof structure (1010) may have a first virtual center line (F) parallel to the hinge housing (165), and the first support structure (1020) may coincide with at least a portion of the first virtual center line (F).

According to an embodiment, a first curvature (R1) of at least one corner of the first dustproof structure (1110) may be smaller than a second curvature (R2) of at least one corner of the first support structure (1120).

According to an embodiment, the first dustproof structure (1210) may have a greater height than the first support structure (1220).

According to an embodiment, the first support structure (1620) may include a passage (1610) formed in the lengthwise direction of the hinge housing (165).

According to an embodiment, the first support structure (1820) may include at least one guide protrusion (1821).

According to an embodiment, each of the first housing (110) and the second housing (120) may include at least one guide recess (1810) corresponding to the guide protrusion (1821).

According to an embodiment, the foldable electronic device (100) may further include a third dustproof structure and a fourth dustproof structure disposed between the second housing (120) and the hinge housing (165) and a second support structure (320) disposed between the second housing (120) and the hinge housing (165) so as to be adjacent to the third dustproof structure and the fourth dustproof structure.

According to an embodiment, the first dustproof structure (811) and the second dustproof structure (812) disposed between the first housing (110) and the hinge housing (165) may be symmetrical to the third dustproof structure and the fourth dustproof structure disposed between the second housing (120) and the hinge housing (165).

According to an embodiment, a first support structure (310) disposed between the first housing (110) and the hinge housing (165) may be symmetrical to a second support structure (320) disposed between the second housing (120) and the hinge housing (165).

According to an embodiment, the first support structure (310) may slide while being brought into contact with at least a portion of the outer surface of the hinge housing (165).

According to an embodiment, the first housing (110) may include a first coupling protrusion (1940).

According to an embodiment, the first support structure (1920) may include a recess (1924) coupled to at least a portion of the first coupling protrusion (1940) in a sliding manner and disposed on a side surface of the first support structure (1920) and a flange (1922) that protrudes in a direction opposite to that of the second coupling protrusion (1921).

According to an embodiment, at least a portion of the first dustproof structure 1911 may overlap the flange (1922).

A foldable electronic device (100) according to at least one embodiment may include a first housing (110), a second housing (120), a hinge structure (164a) coupled to the first housing (110) and the second housing (120), a hinge housing (165) that accommodates at least a portion of the hinge structure (164a) and that is substantially disposed between the first housing (110) and the second housing (120), at least one first structure (210) disposed between an inner surface of the first housing (110) and an outer surface of the hinge housing (165) and at least partially brought into contact with a first portion (621) of the outer surface of the hinge housing (165) while the foldable electronic device (100) is changed from an unfolded state to a folded state, and at least one second structure (310) disposed between the inner surface of the first housing (110) and the outer surface of the hinge housing (165) so as to be adjacent to the first structure (210) and at least partially brought into contact with a second portion (622) of the outer surface of the hinge housing (165) different from the first portion (621) while the foldable electronic device (100) is changed from the unfolded state to the folded state.

According to the embodiments of the disclosure, the gap between each of the first housing and the second housing and the hinge housing may be maintained constant through the support structure brought into close contact with the dustproof structure.

According to the embodiments of the disclosure, the dustproof structure may be brought into close contact with the support structure, and thus infiltration of external foreign matter between each of the first housing and the second housing and the hinge housing and/or between the dustproof structure and the support structure may be prevented or reduced.

**It** should be appreciated that various embodiments of the disclosure and the terms used therein are not intended to limit the technological features set forth herein to particular embodiments and include various changes or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to the situation, the expression "adapted to or configured to" used in this disclosure may be used interchangeably with, for example, the expression "suitable for", "having the capacity to", "adapted to", "made to", "capable of", or "designed to" in hardware or software. The expression "a device configured to" may mean that the device is "capable of" operating together with another device or other components. For example, a "processor set to (or configured to) perform A, B, and C" may mean a dedicated processor (e.g., an embedded processor) for performing corresponding operations or a generic-purpose processor (e.g., a CPU or an AP) that performs corresponding operations by executing one or more programs stored in a memory device (e.g., the memory 130).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. The "module" may be implemented mechanically or electronically and may include, for example, an application-specific integrated circuit (ASIC) chip, field-programmable gate arrays (FPGAs), or a programmable-logic device for performing some operations, which are known or will be developed.

At least a part of an apparatus (e.g., modules or functions thereof) or a method (e.g., operations) according to various embodiments may be implemented by instructions stored in computer-readable storage media (e.g., the memory 130) in the form of a program module. The instructions, when executed by a processor (e.g., the processor 120), may cause the processor to perform functions corresponding to the instructions. The computer-readable storage media may include a hard disk, a floppy disk, a magnetic media (e.g., a magnetic tape), an optical media (e.g., CD-ROM, DVD, magneto-optical media (e.g., a floptical disk)), an embedded memory, and the like. The instructions may include a code made by a compiler or a code executable by an interpreter.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device comprising:
a first housing (110);
a second housing (120);
a hinge structure (164a) coupled to the first housing (110) and the second housing (120);
a hinge housing (165) accommodating at least part of the hinge structure (164a) and substantially disposed between the first housing (110) and the second housing (120);
a first spacer structure (310) disposed on an inner surface of the first housing (110), the first spacer structure (310) configured to maintain a gap between the first housing (110) and the hinge housing (165);
a second spacer structure (320) disposed on an inner surface of the second housing (120), the second spacer structure (320) configured to maintain a gap between the second housing (120) and the hinge housing (165); and
a first dust proof structure (210) arranged in line with the first spacer structure (310) along a direction parallel to a folding axis (A) of the foldable electronic device, wherein at least a portion of the first dust proof structure (210) is configured to contact a portion of the outer surface of the hinge housing (165) while a folding state of the electronic device is changed from the unfolded state to the folded state; and
a second dust proof structure (220) arranged in line with the second spacer structure (320) along a direction parallel to the folding axis (A) of the foldable electronic device, wherein at least a portion of the second dust proof structure (220) is configured to contact a portion of the outer surface of the hinge housing (165) while a folding state of the electronic device is changed from the unfolded state to the folded state.

2. The foldable electronic device of claim 1, wherein a length of the first dust proof structure (210) in the direction parallel to the folding axis (A) is longer than a length of the first spacer structure (310) in the direction parallel to the folding axis (A), and
wherein a length of the second dust proof structure (220) in the direction parallel to the folding axis is longer than a length of the second spacer structure (320) in the direction parallel to the folding axis (A).

3. The foldable electronic device of claim 1, wherein a height (Hd) of the first dustproof structure (1210) measured in a direction perpendicular to the inner surface of the first housing (110) before the first dustproof structure (1210) contacts the hinge housing (110) is greater than a height (Hs) of the first spacer structure (1220) measured in the direction perpendicular to the inner surface of the first housing (110) before the first spacer structure (1220) contacts the hinge housing (110), and
wherein a height of the second dustproof structure measured in a direction perpendicular to the inner surface of the second housing before the second dustproof structure contacts the hinge housing is greater than a height of the second spacer structure measured in the direction perpendicular to the inner surface of the second housing before the second spacer structure contacts the hinge housing.

4. The foldable electronic device of claim 1, wherein the first spacer structure (310) is symmetrical to the second spacer structure (320) with the folding axis (A) therebetween, and the first dust proof structure (210) is symmetrical to the second dust proof structure (220) with the folding axis (A) therebetween.

5. The foldable electronic device of claim 1, wherein the first dust proof structure (9105) at least partially surrounds a first edge of the first spacer structure (9205), and the second dust proof structure at least partially surrounds a second edge of the second spacer structure.

6. The foldable electronic device of claim 1, wherein a curvature (R1) of at least one corner of the first dust proof structure (1110) is smaller than a curvature (R2) of at least one corner of the first spacer structure (1120), and
wherein a curvature of at least one corner of the second dust proof structure is smaller than a curvature of at least one corner of the second spacer structure.

7. The foldable electronic device of claim 1, wherein the inner surface of the first housing (110) includes a recess (1350) in which the first spacer structure (1320) is disposed, and
wherein the inner surface of the second housing (120) includes a recess in which the second spacer structure is disposed.

8. The foldable electronic device of claim 7, wherein each of the first spacer structure (1320) and the second spacer structure includes a first cavity (1351), and an adhesive member (1360) is formed between at least one portion of the recess and the first cavity (1351).

9. The foldable electronic device of claim 7, wherein the first housing (110) includes a protrusion (1141,1142) on a first side surface of the first housing (110) and the first spacer structure (1320) includes a second cavity (1352) corresponding to the first protrusion (1141,1142) formed on a second side surface of the first spacer structure (1320).

10. The foldable electronic device of claim 9, wherein the protrusion (1141,1142) is coupled to the second cavity (1352) in a manner that the first spacer structure is slid from a first portion of the recess to a second portion after being put into the first portion.

11. The foldable electronic device of claim 10, wherein an adhesive member (1360) is filled in the first portion of the recess.

12. The foldable electronic device of claim 1, wherein at least one of the first spacer structure (1320) and the second spacer structure includes a head portion (1330), a body portion (1321) and a neck portion (1322) between the head portion (1330) and the body portion (1321), and
wherein a first width of the neck portion (1322) is smaller than a second width of the head portion (1330) and a third width of the body portion (1321).

13. The foldable electronic device of any preceding claim, wherein the dust proof structure (210,220) comprises a plurality of fibers.

14. The foldable electronic device of any preceding claim, wherein the first spacer structure (310) is configured to resist at least one of:
a motion of the first housing (110) towards the hinge housing (165) if the first housing (110) is urged towards the hinge housing (165) when the foldable electronic device is in a folded state, or
a motion of the first housing (110) towards the hinge housing (165) if the first housing (110) is urged towards the hinge housing (165) when the foldable electronic device is in an unfolded state.

15. The foldable electronic device of any preceding claim, wherein the second spacer structure (320) is configured to resist at least one of:
a motion of the second housing (120) towards the hinge housing (165) if the second housing (120) is urged towards the hinge housing (165) when the foldable electronic device is in a folded state, or
a motion of the second housing (120) towards the hinge housing (165) if the second housing (120) is urged towards the hinge housing (165) when the foldable electronic device is in an unfolded state.

## Patentansprüche

1. Klappbare elektronische Vorrichtung, umfassend:
ein erstes Gehäuse (110);
ein zweites Gehäuse (120);
eine Scharnierstruktur (164a), die an das erste Gehäuse (110) und das zweite Gehäuse (120) gekoppelt ist;
ein Scharniergehäuse (165), das zumindest Teil der Scharnierstruktur (164a) aufnimmt und im Wesentlichen zwischen dem ersten Gehäuse (110) und dem zweiten Gehäuse (120) vorgesehen ist;
eine erste Abstandsstruktur (310), die an einer Innenfläche des ersten Gehäuses (110) vorgesehen ist, wobei die erste Abstandsstruktur (310) dazu konfiguriert ist, einen Spalt zwischen dem ersten Gehäuse (110) und dem Scharniergehäuse (165) aufrechtzuerhalten;
eine zweite Abstandsstruktur (320), die an einer Innenfläche des zweiten Gehäuses (120) vorgesehen ist, wobei die zweite Abstandsstruktur (320) dazu konfiguriert ist, einen Spalt zwischen dem zweiten Gehäuse (120) und dem Scharniergehäuse (165) aufrechtzuerhalten; und
eine erste staubdichte Struktur (210), die in Linie mit der ersten Abstandsstruktur (310) entlang einer Richtung parallel zu einer Klappachse (A) der klappbaren elektronischen Vorrichtung angeordnet ist, wobei zumindest ein Abschnitt der ersten staubdichten Struktur (210) dazu konfiguriert ist, einen Abschnitt der Außenfläche des Scharniergehäuses (165) zu kontaktieren, während ein Klappzustand der elektronischen Vorrichtung von dem aufgeklappten Zustand in den zusammengeklappten Zustand geändert wird; und
eine zweite staubdichte Struktur (220), die in Linie mit der zweiten Abstandsstruktur (320) entlang einer Richtung parallel zu der Klappachse (A) der klappbaren elektronischen Vorrichtung angeordnet ist, wobei zumindest ein Abschnitt der zweiten staubdichten Struktur (220) dazu konfiguriert ist, einen Abschnitt der Außenfläche des Scharniergehäuses (165) zu kontaktieren, während ein Klappzustand der elektronischen Vorrichtung von dem aufgeklappten Zustand in den zusammengeklappten Zustand geändert wird.

2. Klappbare elektronische Vorrichtung nach Anspruch 1, wobei eine Länge der ersten staubdichten Struktur (210) in der Richtung parallel zu der Klappachse (A) länger als eine Länge der ersten Abstandsstruktur (310) in der Richtung parallel zu der Klappachse (A) ist, und
wobei eine Länge der zweiten staubdichten Struktur (220) in der Richtung parallel zu der Klappachse länger als eine Länge der zweiten Abstandsstruktur (320) in der Richtung parallel zu der Klappachse (A) ist.

3. Klappbare elektronische Vorrichtung nach Anspruch 1, wobei eine Höhe (Hd) der ersten staubdichten Struktur (1210) gemessen in einer Richtung senkrecht zu der Innenfläche des ersten Gehäuses (110), bevor die erste staubdichte Struktur (1210) das Scharniergehäuse (110) kontaktiert, größer als eine Höhe (Hs) der ersten Abstandsstruktur (1220) gemessen in der Richtung senkrecht zu der Innenfläche des ersten Gehäuses (110), bevor die erste Abstandsstruktur (1220) das Scharniergehäuse (110) kontaktiert, ist, und
wobei eine Höhe der zweiten staubdichten Struktur gemessen in einer Richtung senkrecht zu der Innenfläche des zweiten Gehäuses, bevor die zweite staubdichte Struktur das Scharniergehäuse kontaktiert, größer als eine Höhe der zweiten Abstandsstruktur gemessen in der Richtung senkrecht zu der Innenfläche des zweiten Gehäuses, bevor die zweite Abstandsstruktur das Scharniergehäuse kontaktiert, ist.

4. Klappbare elektronische Vorrichtung nach Anspruch 1, wobei die erste Abstandsstruktur (310) symmetrisch zu der zweiten Abstandsstruktur (320) mit der Klappachse (A) dazwischen ist und die erste staubdichte Struktur (210) symmetrisch zu der zweiten staubdichten Struktur (220) mit der Klappachse (A) dazwischen ist.

5. Klappbare elektronische Vorrichtung nach Anspruch 1, wobei die erste staubdichte Struktur (9105) zumindest teilweise eine erste Kante der ersten Abstandsstruktur (9205) umgibt und die zweite staubdichte Struktur zumindest teilweise eine zweite Kante der zweiten Abstandsstruktur umgibt.

6. Klappbare elektronische Vorrichtung nach Anspruch 1, wobei eine Krümmung (R1) von zumindest einer Ecke der ersten staubdichten Struktur (1110) kleiner als eine Krümmung (R2) von zumindest einer Ecke der ersten Abstandsstruktur (1120) ist, und
wobei eine Krümmung von zumindest einer Ecke der zweiten staubdichten Struktur kleiner als eine Krümmung von zumindest einer Ecke der zweiten Abstandsstruktur ist.

7. Klappbare elektronische Vorrichtung nach Anspruch 1, wobei die Innenfläche des ersten Gehäuses (110) eine Aussparung (1350) beinhaltet, in der die erste Abstandsstruktur (1320) vorgesehen ist, und
wobei die Innenfläche des zweiten Gehäuses (120) eine Aussparung beinhaltet, in der die zweite Abstandsstruktur vorgesehen ist.

8. Klappbare elektronische Vorrichtung nach Anspruch 7, wobei jede von der ersten Abstandsstruktur (1320) und der zweiten Abstandsstruktur einen ersten Hohlraum (1351) beinhaltet und ein Haftelement (1360) zwischen zumindest einem Abschnitt der Aussparung und dem ersten Hohlraum (1351) gebildet ist.

9. Klappbare elektronische Vorrichtung nach Anspruch 7, wobei das erste Gehäuse (110) einen Vorsprung (1141, 1142) an einer ersten Seitenfläche des ersten Gehäuses (110) beinhaltet und die erste Abstandsstruktur (1320) einen zweiten Hohlraum (1352) entsprechend dem ersten Vorsprung (1141, 1142) beinhaltet, der an einer zweiten Seitenfläche der ersten Abstandsstruktur (1320) gebildet ist.

10. Klappbare elektronische Vorrichtung nach Anspruch 9, wobei der Vorsprung (1141, 1142) auf eine Weise an den zweiten Hohlraum (1352) gekoppelt ist, dass die erste Abstandsstruktur von einem ersten Abschnitt der Aussparung zu einem zweiten Abschnitt geschoben wird, nachdem sie in den ersten Abschnitt gesetzt wird.

11. Klappbare elektronische Vorrichtung nach Anspruch 10, wobei ein Haftelement (1360) in den ersten Abschnitt der Aussparung gefüllt ist.

12. Klappbare elektronische Vorrichtung nach Anspruch 1, wobei zumindest eines von der ersten Abstandsstruktur (1320) und der zweiten Abstandsstruktur einen Kopfabschnitt (1330), einen Körperabschnitt (1321) und einen Halsabschnitt (1322) zwischen dem Kopfabschnitt (1330) und dem Körperabschnitt (1321) beinhaltet, und
wobei eine erste Breite des Halsabschnittes (1322) kleiner als eine zweite Breite des Kopfabschnittes (1330) und eine dritte Breite des Körperabschnittes (1321) ist.

13. Klappbare elektronische Vorrichtung nach einem vorhergehenden Anspruch, wobei die staubdichte Struktur (210, 220) eine Vielzahl von Fasern umfasst.

14. Klappbare elektronische Vorrichtung nach einem vorhergehenden Anspruch, wobei die erste Abstandsstruktur (310) dazu konfiguriert ist, zumindest einem von Folgendem zu widerstehen:
einer Bewegung des ersten Gehäuses (110) zu dem Scharniergehäuse (165), wenn das erste Gehäuse (110) zu dem Scharniergehäuse (165) gedrückt wird, wenn die klappbare elektronische Vorrichtung in einem zusammengeklappten Zustand ist, oder
einer Bewegung des ersten Gehäuses (110) zu dem Scharniergehäuse (165), wenn das erste Gehäuse (110) zu dem Scharniergehäuse (165) gedrückt wird, wenn die klappbare elektronische Vorrichtung in einem aufgeklappten Zustand ist.

15. Klappbare elektronische Vorrichtung nach einem vorhergehenden Anspruch, wobei die zweite Abstandsstruktur (320) dazu konfiguriert ist, zumindest einem von Folgendem zu widerstehen:
einer Bewegung des zweiten Gehäuses (120) zu dem Scharniergehäuse (165), wenn das zweite Gehäuse (120) zu dem Scharniergehäuse (165) gedrückt wird, wenn die klappbare elektronische Vorrichtung in einem zusammengeklappten Zustand ist, oder
einer Bewegung des zweiten Gehäuses (120) zu dem Scharniergehäuse (165), wenn das zweite Gehäuse (120) zu dem Scharniergehäuse (165) gedrückt wird, wenn die klappbare elektronische Vorrichtung in einem aufgeklappten Zustand ist.

## Revendications

1. Dispositif électronique pliable, comprenant :
un premier boîtier (110) ;
un second boîtier (120) ;
une structure de charnière (164a) couplée au premier boîtier (110) et au second boîtier (120) ;
un boîtier de charnière (165) recevant au moins une partie de la structure de charnière (164a) et sensiblement disposé entre le premier boîtier (110) et le second boîtier (120) ;
une première structure d'entretoise (310) disposée sur une surface intérieure du premier boîtier (110), la première structure d'entretoise (310) étant conçue pour maintenir un espace entre le premier boîtier (110) et le boîtier de charnière (165) ;
une seconde structure d'entretoise (320) disposée sur une surface intérieure du second boîtier (120), la seconde structure d'entretoise (320) étant conçue pour maintenir un espace entre le second boîtier (120) et le boîtier de charnière (165) ; et
une première structure anti-poussière (210) agencée alignée à la première structure d'entretoise (310) selon une direction parallèle à un axe de pliage (A) du dispositif électronique pliable, dans lequel au moins une partie de la première structure anti-poussière (210) est conçue pour venir en contact avec une partie de la surface extérieure du boîtier de charnière (165) tandis qu'un état de pliage du dispositif électronique est changé de l'état déplié à l'état plié ; et
une seconde structure anti-poussière (220) agencée alignée à la seconde structure d'entretoise (320) selon une direction parallèle à l'axe de pliage (A) du dispositif électronique pliable, dans lequel au moins une partie de la seconde structure anti-poussière (220) est conçue pour venir en contact avec une partie de la surface extérieure du boîtier de charnière (165) tandis qu'un état de pliage du dispositif électronique est changé de l'état déplié à l'état plié.

2. Dispositif électronique pliable selon la revendication 1, dans lequel une longueur de la première structure anti-poussière (210) selon la direction parallèle à l'axe de pliage (A) est plus longue qu'une longueur de la première structure d'entretoise (310) dans la direction parallèle à l'axe de pliage (A), et
dans lequel une longueur de la seconde structure anti-poussière (220) dans la direction parallèle à l'axe de pliage est plus longue qu'une longueur de la seconde structure d'entretoise (320) dans la direction parallèle à l'axe de pliage (A).

3. Dispositif électronique pliable selon la revendication 1, dans lequel une hauteur (Hd) de la première structure anti-poussière (1210) mesurée dans une direction perpendiculaire à la surface intérieure du premier boîtier (110) avant que la première structure anti-poussière (1210) ne vienne en contact avec le boîtier de charnière (110) est supérieure à une hauteur (Hs) de la première structure d'entretoise (1220) mesurée dans la direction perpendiculaire à la surface intérieure du premier boîtier (110) avant que la première structure d'entretoise (1220) ne vienne en contact avec le boîtier de charnière (110), et
dans lequel une hauteur de la seconde structure anti-poussière mesurée dans une direction perpendiculaire à la surface intérieure du second boîtier avant que la seconde structure anti-poussière ne vienne en contact avec le boîtier de charnière est supérieure à une hauteur de la seconde structure d'entretoise mesurée dans la direction perpendiculaire à la surface intérieure du second boîtier avant que la seconde structure d'entretoise ne vienne en contact avec le boîtier de charnière.

4. Dispositif électronique pliable selon la revendication 1, dans lequel la première structure d'entretoise (310) est symétrique à la seconde structure d'entretoise (320) avec l'axe de pliage (A) entre elles, et la première structure anti-poussière (210) est symétrique à la seconde structure anti-poussière (220) avec l'axe de pliage (A) entre elles.

5. Dispositif électronique pliable selon la revendication 1, dans lequel la première structure anti-poussière (9105) entoure au moins partiellement un premier bord de la première structure d'entretoise (9205), et la seconde structure anti-poussière entoure au moins partiellement un second bord de la seconde structure d'entretoise.

6. Dispositif électronique pliable selon la revendication 1, dans lequel une courbure (R1) d'au moins un coin de la première structure anti-poussière (1110) est plus petite qu'une courbure (R2) d'au moins un coin de la première structure d'entretoise (1120), et
dans lequel une courbure d'au moins un coin de la seconde structure anti-poussière est plus petite qu'une courbure d'au moins un coin de la seconde structure d'entretoise.

7. Dispositif électronique pliable selon la revendication 1, dans lequel la surface interne du premier boîtier (110) comprend un évidement (1350) dans lequel la première structure d'entretoise (1320) est disposée, et
dans lequel la surface interne du second boîtier (120) comprend un évidement dans lequel la seconde structure d'entretoise est disposée.

8. Dispositif électronique pliable selon la revendication 7, dans lequel chacune de la première structure d'entretoise (1320) et de la seconde structure d'entretoise comprend une première cavité (1351), et un élément adhésif (1360) est formé entre au moins une partie de l'évidement et la première cavité (1351).

9. Dispositif électronique pliable selon la revendication 7, dans lequel le premier boîtier (110) comprend une protubérance (1141, 1142) sur une première surface latérale du premier boîtier (110) et la première structure d'entretoise (1320) comprend une seconde cavité (1352) correspondant à la première protubérance (1141, 1142) formée sur une seconde surface latérale de la première structure d'entretoise (1320).

10. Dispositif électronique pliable selon la revendication 9, dans lequel la protubérance (1141, 1142) est couplée à la seconde cavité (1352) de manière à ce que la première structure d'entretoise soit glissée d'une première partie de l'évidement à une seconde partie après avoir été placée dans la première partie.

11. Dispositif électronique pliable selon la revendication 10, dans lequel un élément adhésif (1360) est rempli dans la première partie de l'évidement.

12. Dispositif électronique pliable selon la revendication 1, dans lequel au moins l'une de la première structure d'entretoise (1320) et de la seconde structure d'entretoise comprend une partie de tête (1330), une partie de corps (1321) et une partie de col (1322) entre la partie de tête (1330) et la partie de corps (1321), et
dans lequel une première largeur de la partie de col (1322) est inférieure à une seconde largeur de la partie de tête (1330) et une troisième largeur de la partie de corps (1321).

13. Dispositif électronique pliable selon l'une quelconque des revendications précédentes, dans lequel la structure anti-poussière (210, 220) comprend une pluralité de fibres.

14. Dispositif électronique pliable selon l'une quelconque des revendications précédentes, dans lequel la première structure d'entretoise (310) est configurée pour résister à au moins l'un de :
un mouvement du premier boîtier (110) vers le boîtier de charnière (165) si le premier boîtier (110) est poussé vers le boîtier de charnière (165) lorsque le dispositif électronique pliable est dans un état plié, ou
un mouvement du premier boîtier (110) vers le boîtier de charnière (165) si le premier boîtier (110) est poussé vers le boîtier de charnière (165) lorsque le dispositif électronique pliable est dans un état déplié.

15. Dispositif électronique pliable selon l'une quelconque des revendications précédentes, dans lequel la seconde structure d'entretoise (320) est configurée pour résister à au moins l'un de :
un mouvement du second boîtier (120) vers le boîtier de charnière (165) si le second boîtier (120) est poussé vers le boîtier de charnière (165) lorsque le dispositif électronique pliable est dans un état plié, ou
un mouvement du second boîtier (120) vers le boîtier de charnière (165) si le second boîtier (120) est poussé vers le boîtier de charnière (165) lorsque le dispositif électronique pliable est dans un état déplié.
